(19) Europäisches Patentamt
European Patent Office
Office européen des brevets

(11) Veröffentlichungsnummer: **0 085 378**
**B1**

(12) **EUROPÄISCHE PATENTSCHRIFT**

(45) Veröffentlichungstag der Patentschrift: **19.03.86**

(21) Anmeldenummer: **83100593.9**

(22) Anmeldetag: **24.01.83**

(51) Int. Cl.⁴: **C 09 B 62/515**, C 09 B 62/095, D 06 P 3/66, D 06 P 3/10

POOR QUALITY

(54) **Wasserlösliche Kupferkomplex-Disazoverbindungen, Verfahren zu deren Herstellung und ihre Verwendung als Farbstoffe.**

(30) Priorität: **28.01.82 DE 3202688**

(43) Veröffentlichungstag der Anmeldung: **10.08.83 Patentblatt 83/32**

(45) Bekanntmachung des Hinweises auf die Patenterteilung: **19.03.86 Patentblatt 86/12**

(84) Benannte Vertragsstaaten: **CH DE FR GB IT LI**

(56) Entgegenhaltungen:
**EP-A-0 040 790**
**EP-A-0 040 806**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Hoyer, Ernst, Dr., Eptingweg 3, D-6230 Frankfurt am Main 80 (DE)**
Erfinder: **Fass, Rudolf, Memelstrasse 28, D-6233 Kelkheim (Taunus) (DE)**

EP 0 085 378 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

**PASSUS**, die Zeilen 4 bis 11 von Seite 1 ersetzend:

Die Beispiele 82 und 83 der europäischen Patentanmeldungs-Veröffentlichung Nr. 0 040 806 und das Beispiel 5 der europäischen Patentanmeldungs-Veröffentlichung Nr. 0 040 790 offenbaren faserreaktive Kupferkomplex-Disazoverbindungen (Farbstoffe) mit einer ß-Sulfatoethyl-sulfonyl-Gruppe und einer Sulfophenylamino-fluortriazinylamino-Gruppe. Diese Farbstoffe besitzen eine verbesserungswürdige Auswaschbarkeit der auf dem Fasermaterial nicht fixierten Anteile, die ungefärbte Teile des Materials bzw. Begleitmaterial bei der üblichen Nachbehandlung anflecken. Es wurde nun gefunden, daß man durch Einführung einer Sulfogruppe in die Diazokomponente in ortho-Stellung zur metallkomplex-bildenden Oxygruppe neue Farbstoffe erhalten kann, die diesbezüglich deutlich bessere und somit anwendungstechnisch vorteilhaftere Eigenschaften besitzen.

Die vorliegende Erfindung betrifft somit neue, wertvolle und vorteilhafte wasserlösliche Kupferkomplex-Disazoverbindungen, die die allgemeine Formel (1)

Die Erfindung liegt auf dem technischen Gebiet der faserreaktiven Kupferkomplex-Disazofarbstoffe.

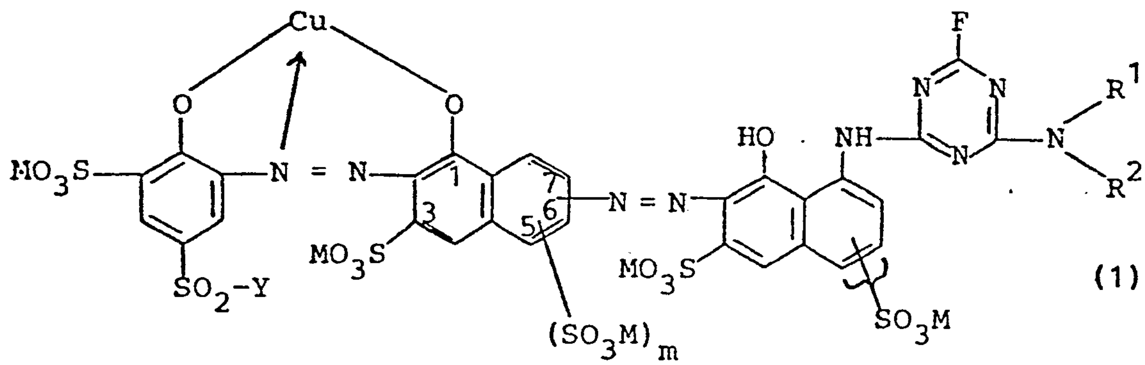

(1)

besitzen. In dieser bedeuten:

m ist die Zahl Null oder 1 (wobei im Falle m = 0 diese Gruppe Wasserstoff ist);

die freistehende Azogruppe kann an den mittelständigen Naphthalinkern in 6- oder 7-Stellung gebunden sein;

sofern m gleich 1 ist, ist diese Sulfogruppe in 5-Stellung gebunden, wenn die Azogruppe in 6-Stellung steht, und ist in 6-Stellung gebunden, wenn die Azogruppe in 7-Stellung steht;

$R^1$ ist ein Wasserstoffatom oder eine geradkettige oder verzweigte Alkylgruppe von 1 bis 4 C-Atomen, die substituiert sein kann, bevorzugt durch eine Hydroxy-, Sulfato-, Sulfo- oder Carboxygruppe oder eine Alkoxygruppe von 1 bis 4 C-Atomen;

$R^2$ ist ein Wasserstoffatom oder eine Cycloalkylgruppe, wie Cyclopentyl- oder Cyclohexylgruppe, die durch 1 bis 3 Methylgruppen substituiert sein kann, oder eine geradkettige oder verzweigte Alkylgruppe von 1 bis 4 C-Atomen, die substituiert sein kann, bevorzugt durch eine Hydroxy-, Sulfato-, Sulfo- oder Carboxygruppe oder eine Alkoxygruppe von 1 bis 4 C-Atomen, oder

ist ein Arylrest, der substituiert sein

kann, wobei die Substituenten bevorzugt 1, 2 oder 3 Substituenten sind, die aus der Menge: 3 Alkylgruppen von 1 bis 4 C-Atomen, 2 Alkoxygruppen von 1 bis 4 C-Atomen, 2 Chloratomen, 3 Sulfogruppen, 1 Carboxygruppe und 1 Gruppe der nachstehend definierten Formel $-SO_2-Y$ ausgewählt sind,

wobei $R^1$ und $R^2$ zueinander gleich oder voneinander verschieden sein können, oder

$R^1$ und $R^2$ bilden als Alkylenreste von 1 bis 4 C-Atomen zusammen mit dem Stickstoffatom und gegebenenfalls einem Sauerstoff-, Schwefel- oder Stickstoffatom als weiterem Heteroatom einen heterocyclischen 6-gliedrigen Rest, wie beispielsweise den Morpholin-, den Thiomorpholin-, den Piperazin- oder den Piperidin-Rest;

Y ist die Vinylgruppe oder eine Gruppe der allgemeinen Formel (2)

$-CH_2-CH_2-X$ (2)

in welcher

X einen alkalisch eliminierbaren, anorganischen oder organischen Rest bedeutet;

M ist ein Wasserstoffatom oder das Äquivalent eines Metalls, vorzuysweise eines ein- oder zweiwertiyen Metalls, wie Alkali- oder Erdalkalimetalls, insbesondere des Natriums, Kaliums oder Calciums.

Alkylgruppen von 1 bis 4 C-Atomen sind bevorzugt die Methylund Äthylgruppe; Alkoxygruppen von 1 bis 4 C-Atomen sind bevorzugt die Methoxy- und Äthoxygruppen. Substituierte Alkylgruppen sind beispielsweise Alkylgruppen von 1 bis 4 C-Atomen, die durch einen oder zwei Substituenten aus der Gruppe Acetylamino, Hydroxy, Sulfato, ß-Sul-fatoäthylsulfonyl, Vinylsulfonyl, ß-Thiosulfatoäthylsulfo-nyl, Alkoxy von 1 bis 4 C-Atomen, Sulfo, Carboxy, Phenyl, Naphthyl, durch Sulfo, Carboxy, ß-Sulfatoäthylsulfonyl, Vinylsulfonyl, ß-Thiosulfatoäthylsulfonyl, Alkyl von 1 bis 4 C-Atomen, Alkoxy von 1 bis 4 C-Atomen, Chlor, Sulfamoyl und/oder Carbamoyl substituiertes Phenyl und durch Sulfo, Carboxy, ß-Sulfatoäthylsulfonyl, Vinylsulfonyl, ß-Thiosulfatoäthylsulfonyl, Alkoxy von 1 bis 4 C-Atomen, Alkyl von 1 bis 4 C-Atomen, Chlor, Sulfamoyl und/oder Carbamoyl substituiertes Naphthyl substituiert sind. Arylreste sind vorzugsweise die Phenyl- und Naphthylreste; diese können beispielsweise durch Substituenten aus der Gruppe Carboxy, Sulfo, Alkyl von 1 bis 4 C-Atomen, Alkoxy von 1 bis 4 C-Atomen, Hydroxy, Chlor, ß-Sulfatoäthylsulfonyl, Vinylsulfonyl, ß-Thiosulfatoäthylsulfonyl, Alkanoylamino von 1 bis 4 C-Atomen im Alkylrest und Carbalkoxy mit 1 bis 4 C-Atomen im Alkylrest substituiert sein.

Die alkalisch eliminierbare Gruppe X ist vorzugsweise ein Chloratom, die Acetoxygruppe, die Phosphatogruppe (entsprechend der allgemeinen Formel $-OPO_3M_2$ mit M der obengenannten Bedeutung), die Thiosulfatogruppe (entsprechend der allgemeinen Formel $-S-SO_3M$ mit M der obenyenannten Bedeutung) und vorzugsweise die Sulfatoyruppe (entsprechend der allgemeinen Formel $-OSO_3M$ mit M der obengenannten Bedeutung).

Die erfindungsgemäßen Kupferkomplex-Disazoverbindungen können in Form ihrer freien Säure und bevorzugt in Form ihrer Salze, insbesondere neutralen Salze, vorliegen; als Salze sind insbesondere die Alkalimetall- und Erdalkalimetallsalze zu nennen, so beispielsweise die Natrium-, Kalium- und Calciumsalze. Die neuen Verbindungen finden bevorzugt in Form dieser Salze ihre Verwendung zum Färben (im allgemeinen Sinne und einschließlich des Bedruckens verstanden) von hydroxy- und/oder carbonamidgruppenhaltigem Material.

Die Aminogruppe der allgemeinen Formel $-NR^1R^2$ ist beispielsweise die Amino-, Methylamino-, Äthylamino-, Propylamino-, Isopropylamino-, Butylamino-, ß-Methoxyäthylamino-, Dimethylamino-, Diäthylamino-, N-β-Sulfoäthyl-N-methylamino-, ß-Hydroxyäthylamino-, ß-Sulfatoäthylamino-, Cyclohexylamino-, Morpholino-, Piperidino- und die Piperazino-Gruppe, vor allem jedoch Aminogruppen mit einem gegebenenfalls substituierten Arylrest, wie beispielsweise die Phenylamino-, N-Methyl-N-phenyl-amino-, Toluidino-, Xylidino-, Chloranilino-, Anisidino-, Phenetidino-, Sulfoanilino-, 3-(ß-Sulfatoäthylsulfonyl)-anilino-, 4-(ß-Sulfatoäthyl-sulfonyl)-anilino-, Disulfo-anilino-, Methyl-sulfo-anilino-, N -Sulfomethyl-anilino-, N-Methyl-sulfoanilino-, Carboxyphenylamino-, 2-Carboxy-5-sulfo-phenylamino-, 2-Carboxy-4-sulfo-phenylamino- und die Sulfonaphthylaminogruppen, wie die 4-Sulfonaphthyl-(1)-amino-, 3,6-Disulfonaphthyl-(1)-amino- und 3,6,8-Trisulfonaphthyl-(1)-amino-Gruppe.

Die vorliegende Erfindung betrifft weiterhin Verfahren zur Herstellung dieser erfindungsgemäßen Kupferkomplex-Disazoverbindungen. Diese sind dadurch gekennzeichnet, daß man

a) eine Kupferkomplex-Monoazoverbindung der allgemeinen Formel (3)

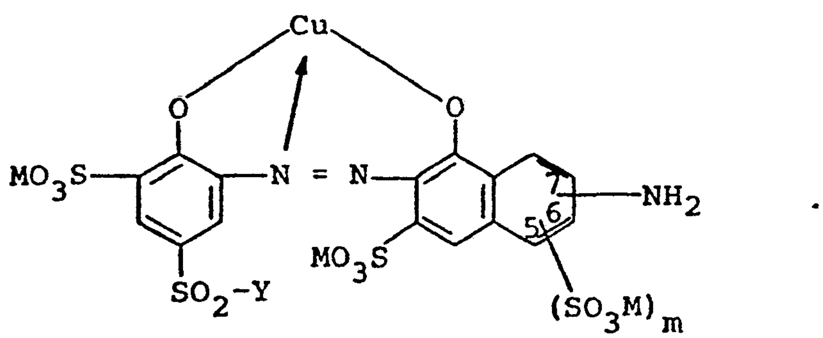

(3)

(in welcher m, Y und M die obengenannten Bedeutungen haben und die freistehende Aminogruppe in 6-Stellung oder 7-Stellung an den Naphthalinkern gebunden ist, wobei im Falle, daß m gleich 1 ist, diese Sulfogruppe in 5-Stellung an den Naphthalinkern gebunden ist, wenn die Aminogruppe in 6-Stellung steht, und die Sulfogruppe in 6-Stellung an den Naphthalinkern gebunden ist, wenn die Aminogruppe in 7-Stellung steht) diazotiert und mit einer Verbindung der allgemeinen Formel (4)

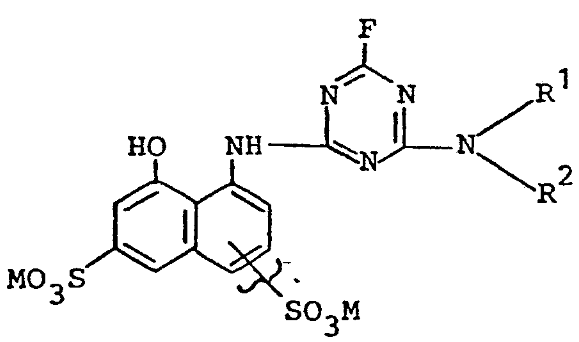

(4)

(in welcher M, $R^1$ und $R^2$ die obengenannten Bedeutungen besitzen) kuppelt oder daß man

b) eine o,o'-Dihydroxy-Azoverbindung der allgemeinen Formel (5)

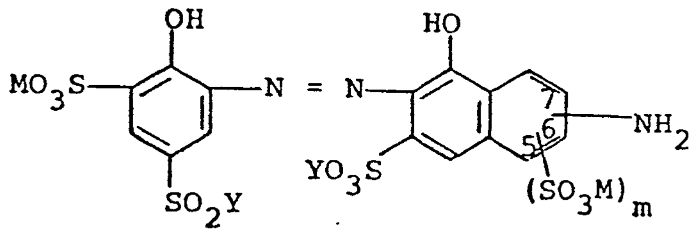

(5)

(in welcher M, Y und m die für Formel (1) bzw. Formel (3) angegebenen Bedeutungen haben) diazotiert und mit einer Verbindung der obengenannten und definierten allgemeinen Formel (4) kuppelt und diese metallfreie Disazoverbindung sodann mit einem kupferabgebenden Mittel behandelt oder daß man

c) eine Disazoverbindung der allgemeinen Formel (6)

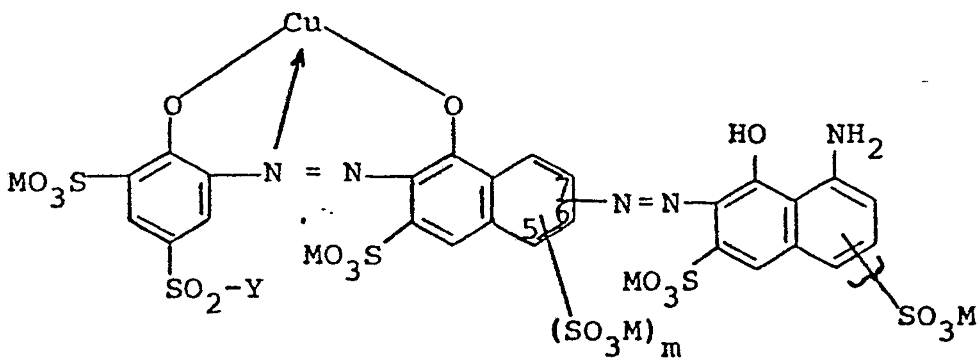

(6)

(in welcher M, Y und m die obengenannten Bedeutungen haben) mit einer Difluor-s-triazin-Verbindung der allgemeinen Formel (7)

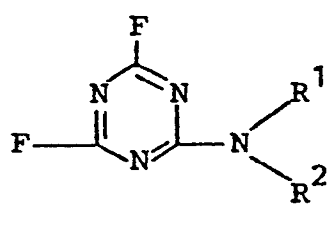

(7)

(in welcher $R^1$ und $R^2$ die obengenannten Bedeutungen haben) umsetzt oder daß man
d) eine metallfreie Disazoverbindung der allgemeinen Formel (8)

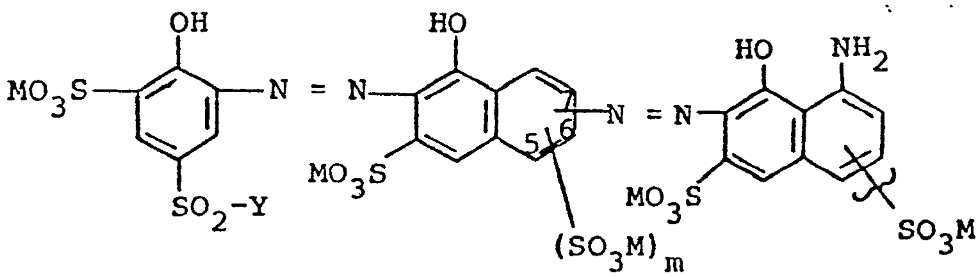

(8)

(in welcher M, Y und m die obengenannten Bedeutungen haben) mit einer Difluor-s-triazinverbindung der oben genannten und definierten allgemeinen Formel (7) umsetzt und sodann mit einem kupferabgebenden Mittel behandelt oder daß man
e) eine Azoverbindung der allgemeinen Formel (9)

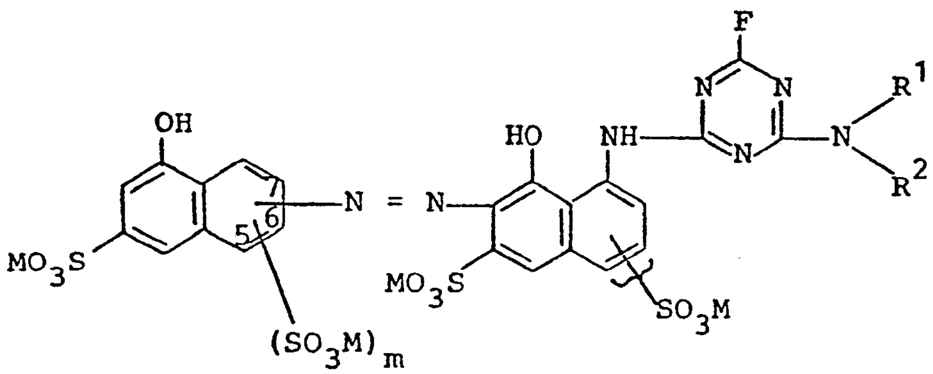

(9)

(in welcher M, m, $R^1$ und $R^2$ die obengenannten Bedeutungen haben) mit der Diazoniumverbindung eines Aminophenols der allgemeinen Formel (10)

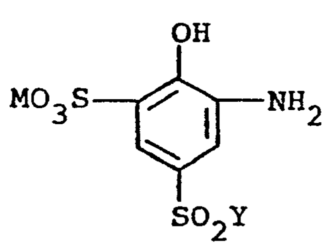

(10)

(in welcher Y die oben genannte Bedeutung hat) kuppelt und die Disazoverbindung mit einem kupferabgebenden Mittel behandelt, oder daß man

f) eine metallfreie o,o'-Dihydroxy-Disazoverbindung der allgemeinen Formel (11)

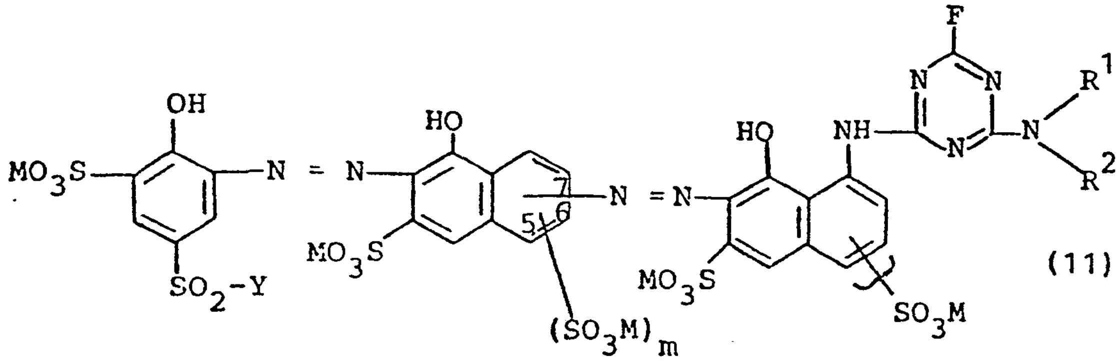

(11)

(in welcher M, m, Y, $R^1$ und $R^2$ die obengenannten Bedeutungen haben) mit einem kupferabgebenden Mittel behandelt, oder daß man

g) eine Kupferkomplex-Disazoverbindung der allgemeinen Formel (12)

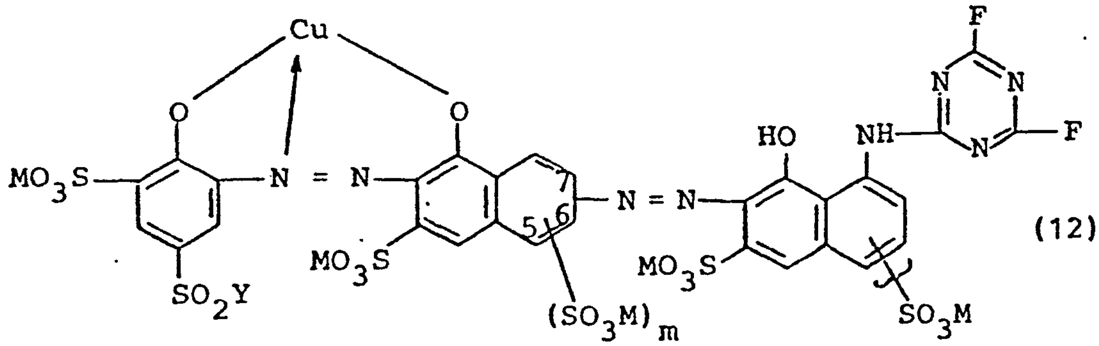

(12)

(in welcher M, m und Y die obengenannten Bedeutungen haben) mit einer Verbindung der allgemeinen Formel $HNR^1R^2$ mit $R^1$ und $R^2$ der obengenannten Bedeutung umsetzt.

Die erfindungsgemäßen Umsetzungen können bezüglich ihrer Verfahrensbedingungen analog bekannten Verfahrensweisen durchgeführt werden. Solche Verfahrensweisen der Diazotierung und Kupplung und der Umsetzung von Aminoverbindungen mit Fluortriazinverbindungen sind allgemein bekannt; für die letztbenannte Kondensationsreaktion sei beispielsweise auf die Europäischen Offenlegungsschriften Nrs. 00 36 133 und 00 40 806 aufmerksam gemacht. Ebenso erfolgt die Kupferkomplexbildung der metallfreien o,o'-Dihydroxy-Azoverbindungen durch Umsetzung mit einem kupferabgebenden Mittel nach an und für sich bekannten Verfahrensweisen; diese sind beispielsweise in den deutschen Auslegeschriften Nrs. 15 44 541 und 16 44 155

beschrieben.

Kupferabgebende Mittel sind beispielsweise die Salze des zweiwertigen Kupfers, wie Kupfersulfat, Kupferchlorid, Kupferacetat und Kupfercarbonat.

Die Ausgangsverbindungen der allgemeinen Formel (4) können beispielsweise analog den Verfahrensweisen der oben beschriebenen Europäischen Offenlegungsschriften hergestellt werden. Die Ausgangsverbindungen der allgemeinen Formel (6) lassen sich beispielsweise gemäß den Verfahrensweisen der deutschen Offenlegungsschrift 1 544 541 synthetisieren. Die metallfreien Disazoverbindungen der allgemeinen Formel (11) können aus den metallfreien Disazoverbindungen der allgemeinen Formel (8) durch Umsetzung mit einer Difluortriazin-Verbindung der oben genannten allgemeinen Formel (7) oder durch Umsetzung einer metallfreien Disazoverbindung der obigen allgemeinen Formel (8) mit Cyanurfluorid und anschließender zweiter Kondensationsreaktion mit einer Aminoverbindung der obengenannten und definierten allgemeinen Formel $HNR^1R^2$ hergestellt werden, oder sie sind über die erfindungsgemäße Verfahrensvariante b) erhältlich.

Die als Ausgangsverbindung dienende Kupferkomplexverbindung der allgemeinen Formel (12) kann beispielsweise durch Umsetzung von Cyanurfluorid mit einer Verbindung der obigen Formel (6) analog bekannten Verfahrensweisen hergestellt werden.

Die als Ausgangsverbindung dienende Monoazoverbindung der allgemeinen Formel (9) läßt sich beispielsweise durch Kupplung der Diazoniumverbindung der Aminonaphtholsulfonsäure der allgemeinen Formel (13)

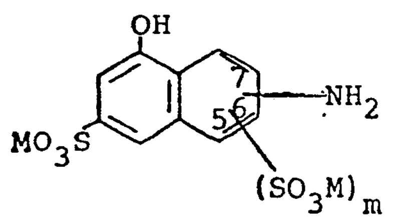

(13)

(in welcher M und m die obengenannten Bedeutungen haben und die Stellung der Sulfogruppe und Aminogruppe wie in Formel (5) definiert ist) mit einer Verbindung der oben genannten und definierten allgemeinen Formel (4) herstellen.

Aminophenole der allgemeinen Formel (10), die als Ausgangsverbindungen zur Herstellung der erfindungsgemäßen Kupferkomplex-Disazoverbindungen dienen können, sind beispielsweise 4-(ß-Chloräthylsulfonyl)-2-amino-phenol-6-sulfonsäure, 4-(ß-Phosphatoäthylsulfonyl)-2-amino-phenol-6-sulfonsäure, 4-(ß-Sulfatoäthylsulfonyl)-2-amino-phenol-6-sulfonsäure, 4-(ß-Thiosulfatoäthylsulfonyl)-2-amino-phenol-6-sulfonsäure und 4-Vinylsulfonyl-2-amino-phenol-6-sulfonsäure.

Aminonaphtholsulfonsäure-Verbindungen der allgemeinen Formel (13), die als Ausgangsverbindungen zur Herstellung der erfindungsgemäßen Verbindungen dienen können, sind 6-Amino-1-naphthol-3-sulfonsäure, 7-Amino-1-naphthol-3-sulfonsäure, 6-Amino-1-naphthol-3,5-disulfonsäure und 7-Amino-1-naphthol-3,6-disulfonsäure.

Kupplungskomponenten der allgemeinen Formel (4), die als Ausgangsverbindunyen zur Synthese der erfindungsgemäßen Kupferkomplex-Disazoverbindungen dienen können, sind die N-Acylamino-Verbindungen aus 1-Amino-8-naphthol-3,6- oder -4,6-disulfonsäure mit den Difluor-s-triazin-Verbindungen entsprechend der allgemeinen Formel (7), wie beispielsweise 2,4-Difluor-6-(4'-sulfoanilino)-1,3,5-triazin, 2,4-Difluor-6-(3'-sulfoanilino)-1,3,5-triazin, 2,4-Difluor-6-amino-1,3,5-triazin, 2,4-Dichlor-6-methylamino-1,3,5-triazin, 2,4-Difluor-6-äthylamino-1,3,5-triazin, 2,4-Difluor-6-propylamino-1,3,5-triazin, 2,4-Difluor-6-isopropylamino-1,3,5-triazin, 2,4-Difluor-6-n-butylamino-1,3,5-triazin, 2,4-Difluor-6-(ß-methoxyäthyl)-amino-1,3,5-triazin, 2,4-Difluor-6-dimethyl amino-1,3,5-triazin, 2,4-Difluor-6-diäthylamino-1,3,5-triazin, 2,4-Difluor-6-(N-βsulfoäthyl-N-methyl-amino)-1,3,5-triazin, 2,4-Difluor-6-β-hydroxy-äthylamino-1,3,5-triazin, 2,4-Difluor-6-β-sulfatoäthyl-amino-1,3,5-triazin, 2,4-Difluor-6-cyclohexylamino-1,3,5-triazin, 2,4-Difluor-6-morpholino-1,3,5-triazin, 2,4-Difluor-6-piperidino-1,3,5-triazin, 2,4-Difluor-6-piperazino-1,3,5-triazin, 2,4-Difluor-6-(N,N-di-β-hydroxyäthyl)-amino-1,3,5-triazin, 2,4-Difluor-6-phenylamino-1,3,5-triazin, 2,4-Di-fluor-6-(N-methyl-N-phenyl-amino)-1,3,5-triazin, 2,4-Difluor-6-p-toluidino-1,3,5-triazin, 2,4-Difluor-6-o-toluidino-oder -m-toluidino-1,3,5-triazin, 2,4-Difluor-6-xylidino-1,3,5-triazin, 2,4-Difluor-6-p-chloranilino-1,3,5-triazin, 2,4-Difluor-6-o-chloranilino- oder -m-chloranilino-1,3,5-triazin, 2,4-Difluor-6-o-anisidino- oder -m-anisidino-1,3,5-triazin, 2,4-Difluor-6-o-phenitidino- oder -m-phene-tidino-1,3,5-triazin, 2,4-Difluor-6-o-carboxyanilino- oder -m-carboxyanilino-1,3,5-triazin, 2,4-Difluor-6-p-anisidino-1,3,5-triazin, 2,4-Difluor-6-p-phenetidino-1,3,5-triazin, 2,4-Difluor-6-m- oder -p-(ß-sulfatoäthylsulfonyl)-anilino-1,3,5-triazin, 2,4-Difluor-6-(2',4'- oder -2',5'-disulfo-anilino)-1,3,5-triazin, 2,4-Difluor-6-N-sulfomethylanilino-1,3,5-triazin, 2,4-Difluor-6-(4'-methyl-2'-sulfoanilino)-1,3,5-triazin, 2,4-Difluor-6-p-carboxy-anilino-1,3,5-triazin, 2,4-Difluor-6-(2'-carboxy-4'- oder-5'-sulfo)-anilino-1,3,5-triazin, 2,4-Difluor-6-(4'-sulfonaphthyl-1'-amino)-1,3,5-triazin, 2,4-Difluor-6-(3',6'-disulfonaphthyl-1'-amino)-1,3,5-triazin und 2,4-Difluor-6-(3',6',8'-trisulfonaphthyl 1'-amino)-1,3,5-triazin.

Von den erfindungsgemäßen Kupferkomplex-Disazoverbindungen entsprechend der allgemeinen Formel (1) sind diejenigen bevorzugt, in denen Y die ß-Thiosulfatoäthyl- und insbesondere die Vinylsulfonyl- oder ß-Sulfatoäthylsulfonyl-Gruppe bedeutet, weiterhin diejenigen, in denen in der endständigen Triazinylaminonaphtholsulfonsäure-Komponente die eine Sulfogruppe meta-ständig zur acylierten Aminogruppe gebunden ist. Weiterhin sind diejenigen bevorzugt, in welchen $R^1$ für ein Wasserstoffatom oder eine Alkylgruppe von 1 bis 4 C-Atomen steht, die durch eine Hydroxy- oder Sulfogruppe substituiert sein kann, und $R^2$ zu $R^1$ gleich oder von $R^1$ verschieden, ein Wasserstoffatom oder eine Alkylgruppe von 1 bis 4 C-Atomen bedeutet, die durch eine Hydroxy-, Sulfo-, Sulfato-, Methoxy- oder Äthoxygruppe substituiert sein kann, oder den phenylrest bedeutet, der durch einen oder zwei Substituenten aus der Gruppe Sulfo, Methyl, Äthyl, Methoxy, Äthoxy, Chlor und Carboxy oder durch eine β-Sulfatoäthylsulfonyl-Gruppe substituiert sein kann, oder den Napthylrest bedeutet, der durch eine, zwei oder drei Sulfogruppen substituiert sein kann, wie beispielsweise die Toluidino-, Xylidino-, Chlorphenylamino-, Methoxy- und Dimethoxy-phenylamino-, die Äthoxyphenylamino-, Sulfophenylamino-, 3-(β-Sulfatoäthylsulfonyl)-phenylamino-, 4-(β-Sulfatoäthylsulfonyl)-phenylamino, die Disulfophenylamino, die Carboxyphenylamino-, die 2-Carboxy-5-phenyl-amino-, 2-Carboxy-4-sulfophenylamino-, 4-Sulfonaphthyl-(1)-amino-, 3,6-Disulfonaphthyl-(1)-amino- und 3,6,8-Trisulfo-naphthyl-(1)-amino-Gruppen sowie der Morpholinorest.

Hervorzuheben von den erfindungsgemäßen Kupferkomplexdisazoverbindungen sind weiterhin die Verbindungen entsprechend den allgemeinen Formeln (14) und (15)

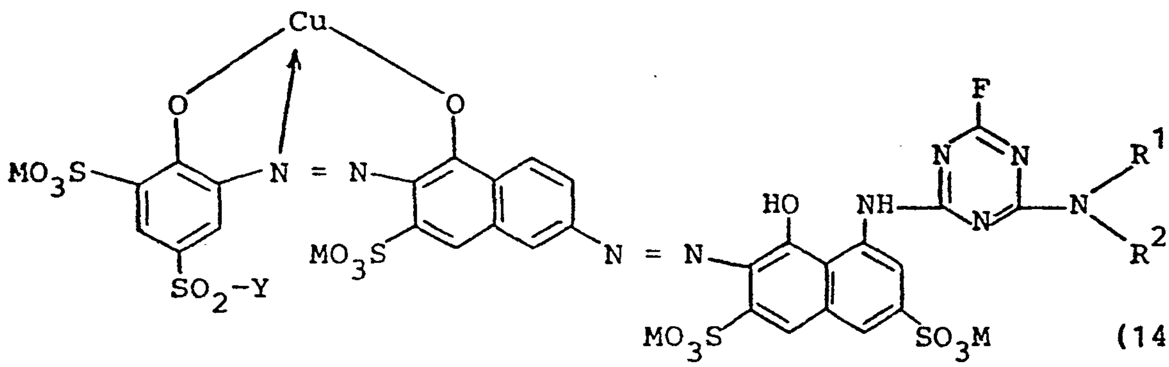

(14)

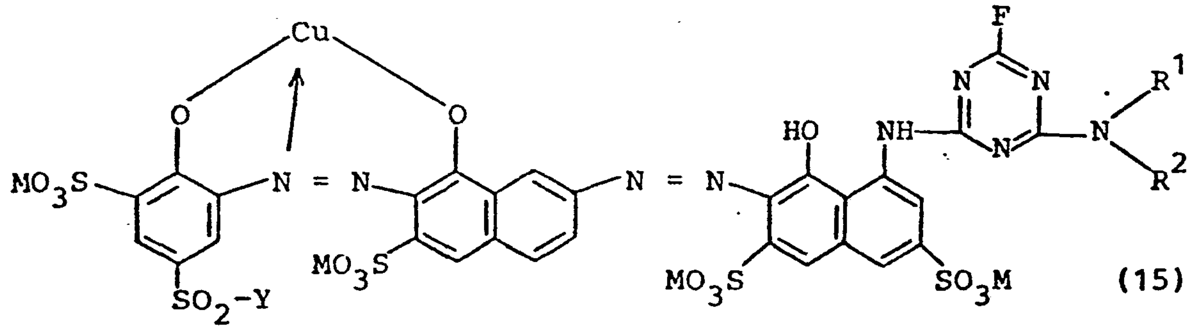

(15)

in welchen die Formelglieder M, Y, $R^1$ und $R^2$ die obengenannten, insbesondere bevorzugten, Bedeutungen haben.

Als Einzelverbindungen können insbesondere die in den Beispielen 1, 2 und 5 beschriebenen erfindungsgemäßen Kupferkomplex-Disazoverbindungen hervorgehoben werden.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine puffersubstanz, wie beispielsweise ein Gemisch aus Mono- und Dinatriumphosphat, zugefügt werden kann. Gegebenenfalls können diese Syntheselösungen auch, gegebenenfalls nach Zusatz einer Puffersubstanz und nach eventuellem Konzentrieren, direkt als Flüssigpräparation der färberischen Verwendung zugeführt werden.

Die erfindungsgemäßen Kupferkomplex-Disazoverbindungen besitzen wertvolle Farbstoffeigenschaften, die infolge ihrer Reste des Vinylsulfontyps und des Fluortriazinyl-Restes faserreaktive Eigenschaften aufweisen. Die

neuen Verbindungen werden bevorzugt zum Färben (im allgemeinen Sinne, einschließlich des Bedruckens) von hydroxy- und/oder carbonamidgruppenhaltigen Materialien, beispielsweise in Form von Flächengebilden, wie Papier und Leder oder von Folien, wie aus Polyamid, oder in der Masse, wie beispielsweise von Polyamid und Polyurethan, insbesondere aber von diesen Materialien in Faserform verwendet. Die vorliegende Erfindung betrifft somit auch die Verwendung der Verbindungen der allgemeinen Formel (1) zum Färben (im obigen Sinne) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken.

Hydroxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische Polyamide, wie Polyamid-6,6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemäßen Kupferkomplex-Disazofarbstoffe lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf Cellulosefasern nach dem Ausziehverfahren unter Verwendung von verschiedensten säurebindenden Mitteln und gegebenenfalls unter Zugabe von neutralen Salzen, wie Natriumchlorid oder Natriumsulfat, sehr gute Farbausbeuten sowie einen ausgezeichneten Farbaufbau. Man färbt bei Temperaturen zwischen 25 und 100°C, vorzugsweise zwischen 30 und 70°C, gegebenenfalls in Gegenwart von üblichen Färbereihilfsmitteln, im wäßrigen Bad. Man kann dabei so vorgehen, daß man das Material in das warme Bad einbringt und dieses allmählich auf die gewünschte Färbetemperatur erwärmt und den Färbe-prozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu 60°C, durch Dämpfen oder durch Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 - 103°C, - oder zweiphasig - beispielsweise durch Bedrucken mit neutraler oder schwach saurer Druckfarbe, anschließender Fixierung entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des behandelten Materials,durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Neben dem üblichen Wasserdampf von 100 - 103°C kann auch überhitzter Dampf und Druckdampf von Temperaturen bis zu 160°C eingesetzt werden. Bei der Fixierung mittels Trockenhitze nach den üblichen Thermofixierverfahren verwendet man Heißluft von 120 - 200°C.

Die säurebindenden und die Fixierung der erfindungsgemäßen Verbindungen auf den Cellulosefasern bewirkenden Mittel sind beispielsweise wasserlösliche basische Salze der Alkalimetalle und ebenfalls Erdalkalimetalle von anorganischen und organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natriumund Kaliumverbindungen gemeint sind. Solche säurebindenden Mittel sind beispielsweise Natriumhydroxyd, Kaliumhydroxyd, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen mit den säurebindenden Mitteln, gegebenenfalls unter Wärmeeinwirkung, werden diese chemisch an die Cellulosefaser gebunden. Insbesondere die Cellulosefärbungen zeigen nach der üblichen Nachbehandlung durch Spülen zur Entfernung von nicht fixierten Anteilen ausgezeichnete Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach üblichen Färbe- und Druckverfahren, durch eine gleiche Farbtiefe beim Färben von Baumwolle und Regeneratcellulosefasern, durch egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen. Nicht fixierte Farbstoffanteile lassen sich leicht auswaschen.

Die Färbungen auf Polyurethanfasern und Polyamidfasern werden üblicherweise aus saurem Milieu

ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erzielen. Zwecks Erreichung einer guten Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Äthylenoxyd. In der Regel wird das zu färbende Material bei einer Temperatur von etwa *) in das zuerst schwach alkalisch eingestellte Bad eingebracht, einige Zeit darin bewegt, das Färbebad auf einen schwach sauren, vorzugsweise schwach essigsauren pH-Wert eingestellt und die eigentliche Färbung bei einer Temperatur zwischen 30 und 100°C durchgeführt. *) 20 bis 40°C

Die erfindungsgemäßen Kupferkomplex-Disazoverbindungen zeichnen sich durch einen hohen Fixiergrad bei dem Färben und Bedrucken von Fasermaterialien aus. Dies ist in der Praxis aus wirtschaftlichen energetischen und ökologischen Gründen von großem Nutzen, da die bessere Ausnutzung des angebotenen Farbstoffes gleichbedeutend ist mit einer energiesparenden, leichteren Auswaschbarkeit des verringerten, nicht fixierten Farbstoffanteiles und geringerer Abwasserbelastung.

Die mit den Kupferkomplex-Disazoverbindungen der Formel (1) hergestellten Färbungen und Drucke zeichnen sich durch klare Nuancen aus. Insbesondere die Färbungen und Drucke auf Cellulosefasermaterialien besitzen, wie bereits erwähnt, eine hohe Farbstärke, darüber hinaus eine gute bis sehr gute Lichtechtheit und sehr gute Naßechtheitseigenschaften, wie Wasch-, Walk-, Wasser-, Seewasser- und Schweißechthei-ten, desweiteren eine gute Plissierechtheit, Bügelechtheit und Reibechtheit.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

**Beispiel 1**

a) 18,9 Teile 4-β-Sulfatoäthylsulfonyl-2-amino-phenol-6-sulfonsäure werden in einem Gemisch aus 50 Teilen Wasser und 25 Teilen Eis suspendiert und durch 3,3 Teile Natriumcarbonat neutral gelöst. 10,3 Volumenteile einer wäßrigen 5n-Natriumnitritlösung werden zugegeben, und das Ganze wird auf ein Gemisch von 13 Volumenteilen einer 31%igen wäßrigen Salzsäure und 100 Teilen Eis laufen lassen. Es wird 30 Minuten bei der Temperatur von 0 bis 5°C weitergerührt, *) ein pH-Wert zwischen 5,8 und 6,2 mit Natriumbicarbonat eingestellt. Anschließend werden 16 Teile 2-Amino-5-naphthol-1,7-disulfonsäure eingetragen und ein pH von 5,5 - 6,8 eingestellt. Die Kupplungsreaktion wird noch einige Stunden bei 10 bis 30°C weitergeführt.

*) überschüssige salpetrige Säure sodann zerstört und Nach beendeter Kupplung würden 11,5 Volumenteile einer wäßrigen 5n-Natriumnitritlösung zugegeben, und das Gemisch wird unter Rühren auf ein Gemisch aus 15 Volumenteilen einer 31 %igen wäßrigen Salzsäure und 300 Teilen Eis gegossen. Es wird bei der Temperatur von 0 bis 5°C 60 Minuten weitergerührt und sodann überschüssige salpetrige Säure, wie üblich, mit Amidosulfonsäure zerstört. Mit Natriumbicarbonat wird ein pH-Wert von 6 eingestellt.

b) Getrennt hiervon wird folgende Reaktionslösung hergestellt: 16 Teile 1-Amino-8-naphthol-3,6-disulfonsäure werden unter Rühren in 100 Teilen Wasser von 15°C suspendiert und mit etwa 10 Volumenteilen einer wäßrigen 10n-Natronlauge bei einem pH-Wert von 6 gelöst. In diese Lösung werden 75 Teile Eis und sodann langsam unter gutem Rühren 7,25 Tle. 2,4,6-Trifluor-1,3,5-triazin bei einer Temperatur von 0°C unter Konstanthaltung eines pH-Wertes von 4,5 durch wäßrige Natronlauge gegeben.

Man rührt noch 5 Minuten weiter, gibt danach 4,75 Teile Anilin hinzu und hält den pH-Wert unter gutem Rühren bei 5,5 bis 6,0 und eine Temperatur von 10 bis 15°C,

c) Die unter a) hergestellte Diazoniumsalzlösung der Aminoazoverbindung und die unter b) hergestellte Lösung des zweifachen Kondensationsproduktes werden bei einer Temperatur von etwa 5°C vereinigt und bei 5 bis 10°C und einem pH-Wert von 5,5 noch mehrere Stunden bis zur Beendigung der Kupplungsreaktion weitergerührt. Sodann gibt man 12,5 Teile kristallisiertes Kupfersulfat und 8,5 Teile kristallisiertes Natriumacetat hinzu und rührt noch ca. 2 Stunden bei 20 bis 45°C und einem pH-Wert von4,5 bis 5,0. Man klärt diese Lösung mittels 5 Teilen Kieselgur und Filtration und fällt die erfindungsgemäße Kupferkomplex-Disazoverbindung durch Zugabe von 380 Teilen Kaliumchlorid aus dem Filtrat aus.

Nach Abfiltration, Trocknen und Vermahlen erhält man ein blauschwarzes Pulver, das neben Elektrolytsalzen das Alkalimetallsalz, vorwiegend Kaliumsalz, der Verbindung der Formel

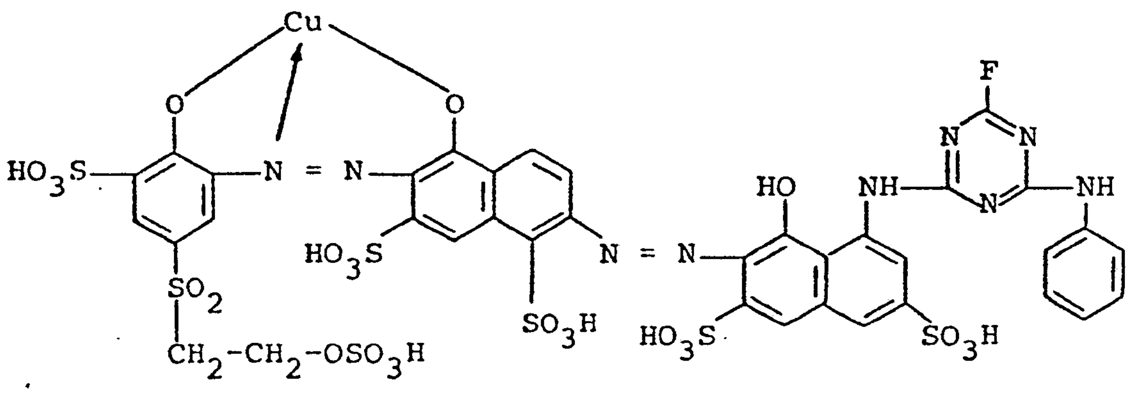

enthält. Dieses zeigt sehr gute faserreaktive Farbstoffeigenschaften und färbt die in der Beschreibung genannten Materialien, wie beispielsweise Baumwolle, nach den in der Technik üblichen Anwendungsmethoden, insbesondere nach den für faserreaktive Farbstoffe üblichen Applikations- und Fixierverfahren in der Färberei und im Druck, in farbstarken, dunkelblauen Nuancen mit sehr guten Echtheiten, von denen insbesondere die Licht-, Wasch-, Wasser- und Schweiß-echtheiten sowie die Chlorbadewasserechtheit, die Lösungsmittelechtheit und die Reibechtheit hervorgehoben werden können.

**Beispiel 2**

a) 75,4 Teile 4-β-sulfatoäthylsulfonyl-2-amino-phenol-6-sulfonsäure werden in üblicher Weise diazotiert. Zu dieser wäßrigen sauren Diazoniumsalzlösung wird eine wäßrige Lösung des Natriumsalzes von 48 Teilen 2-Amino-5-naphthol-7-sulfonsäure hinzugegeben und die Kupplungsreaktion bei etwa 10°C und bei einem pH-Wert von 6,5 unter Rühren während 5 stunden weitergeführt. Sodann wird mit wäßriger Natronlauge der pH-Wert auf 7,5 erhöht und die Lösung mittels Kieselgur und Filtration geklärt. Zu dem Filtrat werden 40 Volumenteile einer wäßrigen 5n-Natriumnitrit-lösung hinzugegeben. Dieses Gemisch läßt man innerhalb einer Stunde unter Rühren auf ein Gemisch von 500 Teilen Eis und 60 Teilen konzentrierter Salzsäure laufen; es wird sodann noch 3 Stunden bei 0 bis 5°C nachgerührt und überschüssige salpetrige Säure anschließend wie üblich zerstört.

b) Getrennt hiervon stellt man folgende Reaktionslösung unter Herstellung der Fluortriazinylamino-naphtholdisulfonsäure-Kupplungskomponente her: Eine Lösung mit einem pH-Wert von 4,5 bis 5,0 von 64 Teilen 1-Amino-8-naphthol-3,6-disulfonsäure in 800 Teilen Wasser wird bei einer Temperatur von 0°C und bei einem pH-Wert zwischen 3 und 4 unter Rühren langsam mit 28 Teilen 2,4,6-Trifluor-1,3,5-triazin versetzt. Anschließend wird bei diesem pH-Wert noch 15 Minuten weitergerührt, sodann eine Lösung des Natriumsalzes von 38 Teilen Anilin-3-sulfonsäure in 120 Tln. Wasser zugegeben und die zweite Kondensationsreaktion bei einem pH-Wert von 5 und einer Temperatur von 20°C unter mehrstündigem Rühren zu Ende geführt.

c) Die hier unter a) hergestellte Diazoniumsalzlösung wird unter Rühren zu der hier unter b) hergestellten Lösung des sekundären Kondensationsproduktes gegeben. Man stellt einen pH-Wert von 6,0 bis 6,5 ein und rührt bei diesem pH bis zur Beendigung der Kupplungsreaktion weiter. sodann erwärmt man auf 25°C und gibt die Lösung von 50 Teilen kristallisiertem Kupfersulfat in 200 Teilen Wasser hinzu. Nach Abkühlung des Ansatzes auf 15°C werden 15 Teile Oxalsäure hinzugegeben; es wird 2 Stunden nachgerührt, mit Kieselgur geklärt, dem Filtrat ein Phosphatpuffer zugesetzt und die wäßrige Lösung mit der erfindungsgemäßen Verbindung eingedampft oder sprühgetrocknet.

Das erhaltene Natriumsalz der erfindungsgemäßen Kupferkomplex-Disazoverbindung der Formel

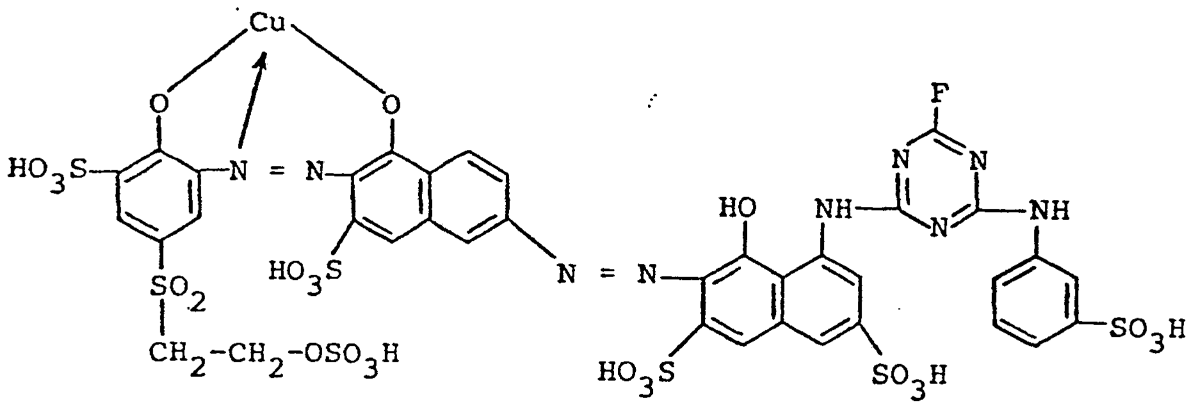

stellt einen vorteilhaften wasserlöslichen Farbstoff mit faserreaktiven Eigenschaften dar. Diese erfindungsgemäße Verbindung eignet sich hervorragend zum Färben der in der Beschreibung genannten Fasermaterialien, insbesondere von Baumwolle, und sie liefert nach den in der Technik für faserreaktive Farbstoffe üblichen Anwendungsmethoden farbstarke Färbungen und Drucke mit schwarzblauer Nuance, dic eine sehr gute Lichtechtheit und sehr gute Naßechtheiten, wie insbesondere sehr gute Wasch-, Wasser-, Meerwasser-, Schweiß- und Lösungsmittelechtheiten sowie eine sehr gute Reibechtheit aufweisen.

**Beispiel 3**

Zur Herstellung einer erfindungsgemäßen Kupferkomplex-Disazoverbindung verfährt man gemäß der Verfahrensweise des Beispieles 2, setzt jedoch bei der Herstellung der Kupplungskomponente gemäß Beispiel 2 b) anstelle der dort angegebenen Aminonaphtholsulfonsäure die gleiche Menge an 2-Amino-8-naphthol-6-sulfonsäure ein.

Man erhält das Alkalimetallsalz, wie beispielsweise Natriumsalz, der Verbindung der Formel

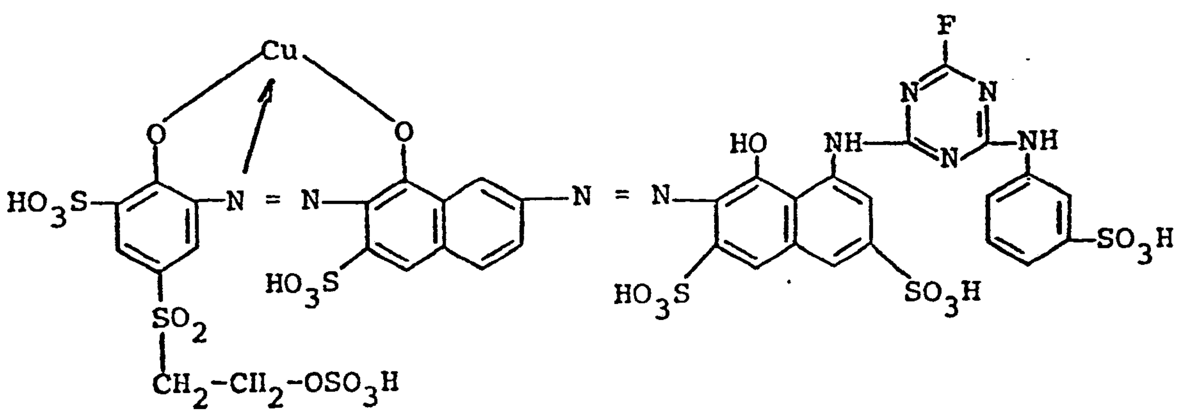

die ebenfalls sehr gute faserreaktive Farbstoffeigenschaften besitzt und beispielsweise Baumwolle in echten, farbstarken dunkelblauen Nuancen färbt.

**Beispiel 4**

a) Ein Gemisch aus einer Lösung von 68,9 Teilen der Kupferkomplex-Verbindung der 1-Hydroxy-6-amino-2-[(2'-hydroxy-5'-β-sulfatoäthylsulfonyl-phenyl)-azo]-naphthalin-3,3'-disulfonsäure in 350 Teilen Wasser und 22

Volumenteilen einer wäßrigen 5n-Natriumnitritlösung mit einer Temperatur von 5 bis 10°C wird unter Rühren in ein Gemisch aus 30 Volumenteilen einer wäßrigen 31 %igen Salzsäure und 500 Teilen Eis einlaufen lassen; hierbei wird die Temperatur bei 5 bis 10°C gehalten. Es wird noch 60 Minuten bei dieser Temperatur weitergerührt und anschließend überschüssige salpetrige Säure mit wenig Amidosulfonsäure zerstört. Mittels Natriumbicarbonat wird ein pH-Wert von 5,9 bis 6,1 eingestellt.

b) Getrennt hiervon wird die im Beispiel 2 b) beschriebene Lösung des sekundären Kondensationsproduktes aus 1-Amino-8-naphthol-3,6-disulfonsäure, Cyanurfluorid und Anilin-3-sulfonsäure in der Hälfte des dort angegebenen Ansatzes hergestellt.

c) Die hier unter a) hergestellte Lösung des Diazoniumsalzes der Kupferkomplex-Azoverbindung und die unter b) beschriebene Lösung des sekundären Kondensationsproduktes werden bei einer Temperatur von etwa 10°C vereinigt. Man rührt das Reaktionsgemisch bei einem pH-Wert von 5,8 bis 6,3 und einer Temperatur zwischen 8 und 10°C noch mehrere Stunden bis zur Beendigung der Kupplungsreaktion weiter. Sodann setzt man 10 Teile Kieselgur hinzu und filtriert die Lösung nach Erwärmen auf 55 bis 60°C. Aus dem Filtrat fällt man die erfindungsgemäße Verbindung mittels Kaliumchlorid aus, filtriert sie ab, trocknet sie und mahlt sie.

Es wird ein schwarzes, elektrolythaltiges Pulver mit dem Alkalimetallsalz, wie Kaliumsalz, der im Beispiel 2 formel-mäßig angegebenen Kupferkomplex-Disazoverbindung erhalten. Diese erfindungsgemäße Verbindung besitzt naturgemäß die gleich guten Eigenschaften wie die gemäß Beispiel 2 hergestellte und mit ihr identische erfindungsgemäße Verbindung.

Die als Ausgangsverbindung dienende, anfangs unter a) erwähnte Kupferkomplex-Monoazoverbindung kann nach der in der deutschen Patentschrift 2 049 664 beschriebenen Verfahrensweise hergestellt werden.

**Beispiel 5**

102 Teile der Kupferkomplex-Disazoverbindung der Formel

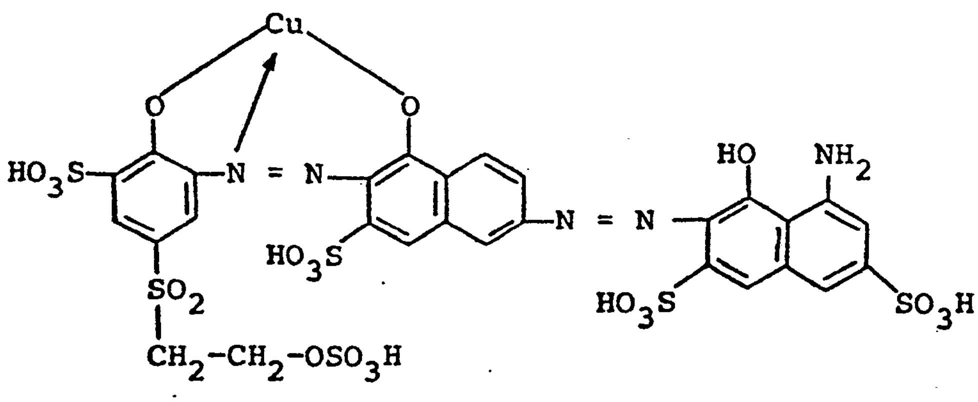

(die analog dem Beispiel 1 der deutschen Auslegeschrift 1 644 155 hergestellt werden kann, wobei man anstelle der 54,2 Teile 1-Hydroxy-6-amino-2-[(2'-hydroxy-5'-β-sulfato-äthylsulfonyl-phenyl)-azo]-naphthalin-3-sulfonsäure 62,2 Teile 1-Hydroxy-6-amino-2-[(2'-hydroxy-5'-β-sulfatoäthyl-sulfonyl-phenyl)-azo]-naphthalin-3,3'-disulfonsäure und anstelle der 39,7 Teile 1-Acetylamino-8-naphthol-3,6-disul-fonsäure 31,9 Teile 1-Amino-8-naphthol-3,6-disulfonsäure einsetzt), in Form des Natrium- oder Kaliumsalzes, werden in 1000 Teilen Wasser bei 50°C gelöst. Die Lösung wird auf einen pH-Wert von 3,0 bis 3,5 eingestellt und sodann auf 0°C abgekühlt. Man gibt eine Lösung von 14,5 Teilen Cyanurfluorid unter Konstanthaltung des pH-Wertes mittels Natriumbicarbonat hinzu.

Nach beendeter Kondensationsreaktion wird die Lösung mit Natriumbicarbonat auf einen pH-Wert von 6 bis 7 eingestellt. 10,7 Teile N-Methyl-anilin werden hinzugegeben, und die zweite Kondensationsreaktion wird bei 10 bis 15°C und einem pH-Wert zwischen 6 und 7 unter Rühren zu Ende geführt. Die erfindungsgemäße Kupferkomplex-Disazoverbindung wird mit Kaliumchlorid ausgefällt und isoliert. Es wird ein schwarzes, elektrolythaltiges Pulver mit dem Alkalimetallsalz, vorwiegend Kaliumsalz der Verbindung der Formel

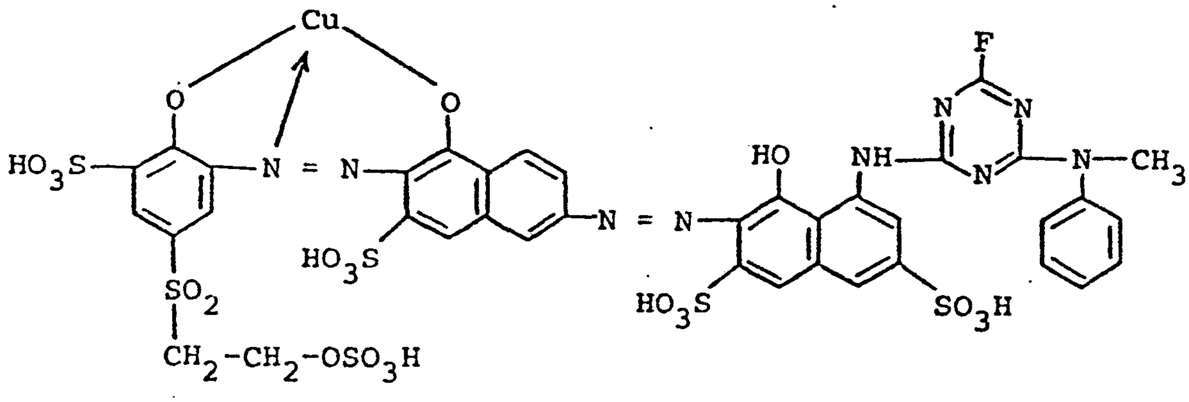

erhalten. Diese erfindungsgemäße Verbindung zeigt ebenfalls sehr gute faserreaktive Farbstoffeigenschaften und färbt beispielsweise Baumwollmaterialien nach den in der Technik für faserreaktive Farbstoffe üblichen Färbe- und Druckverfahren in farbstarken, dunkelblauen Tönen. Diese Färbungen und Drucke zeigen ebenfalls sehr gute Echtheiten, wie beispielsweise sehr gute Licht-, Wasch-, Wasser-, Meerwasser-, Schweiß-, Lösungsmittel- und Reibechtheiten.

**Beispiele 6 bis 116**

In den nachfolgenden Tabellenbeispielen sind weitere erfin-dungsgemäße Kupferkomplex-Disazoverbindungen beschrieben, die durch ihre Ausgangskomponenten (einem Aminophenol entsprechend der allgemeinen Formel (10) als Diazokomponente, einer Aminonaphtholsulfonsäure entsprechend der allgemeinen Formel (13) als kupplungsfähige und diazotierbare Mittelkomponente und einer 1-(Fluortriazinylamino)-8-naphthol-3,6-oder -4,6-disulfonsäure entsprechend der allgemeinen Formel (4) als endständige Kupplungskomponente) charakterisiert sind. Sie können in erfindungsgemäßer Weise, beispielsweise gemäß der im Beispiel 1 oder 2 angegebenen Verfahrensweise durch Umsetzung dieser Ausgangsverbindungen und anschließende Kupferung mit einer kupferabgebenden Verbindung, hergestellt werden.

Diese erfindungsgemäßen Kupferkomplex-Disazoverbindungen besitzen ebenfalls sehr gute faserreaktive Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien nach den für faserreaktive Farbstoffe üblichen Applikations- und Fixiermethoden,mit hohen Farbstärken und guten Echtheiten in der in dem jeweiligen Tabellenbeispiel angegebenen Nuance auf beispielsweise Baumwolle.

Diese Ausgangsverbindungen sind in Form der freien Säure genannt; sie können als solche, ebenso auch in Form ihrer Salze, vorzugsweise Alkalimetallsalze, wie Natrium- oder Kaliumsalze, in die Synthese eingesetzt werden.

| Bsp. | Aminophenol entspr. Formel (10) | Aminonaphtholsulfonsäure entspr. Formel (13) | Fluortriazinylaminonaphthol entspr. Formel (4) | Nuance auf Baumwolle |
|---|---|---|---|---|
| 6 | 4-ß-Sulfatoäthylsulfonyl-2-aminophenol-6-sulfonsäure | 6-Amino-1-naphthol-3-sulfonsäure | 1-/¯4'-Fluor-6'-(4"-sulfophenylamino)-s-triazin-2'-yl_7-amino-3,6-disulfo-8-naphthol | dunkelblau |
| 7 | dito | dito | 1-/¯4'-Fluor-6'-(phenylamino)-s-triazin-2'-yl_7-amino-3,6-disulfo-8-naphthol | dunkelblau |
| 8 | dito | dito | 1-/¯4'-Fluor-6'-(p-toluidino)-s-triazin-2'-yl_7-amino-3,6-disulfo-8-naphthol | dunkelblau |
| 9 | dito | dito | 1-/¯4'-Fluor-6'-(2"-chloranilino)-s-triazin-2'-yl_7-amino-3,6-disulfo-8-naphthol | dunkelblau |
| 10 | dito | dito | 1-/¯4'-Fluor-6'-(3"-carboxyanilino)-s-triazin-2'-yl_7-amino-3,6-disulfo-8-naphthol | dunkelblau |
| 11 | dito | dito | 1-/¯4'-Fluor-6'-(4"-ß-sulfatoethylsulfonyl-anilino)-s-triazin-2'-yl_7-amino-3,6-disulfo-8-naphthol | marineblau |
| 12 | dito | dito | 1-/¯4'-Fluor-6'-(2",4"-disulfoanilino)-s-triazin-2'-yl_7-amino-3,6-disulfo-8-naphthol | dunkelblau |
| 13 | dito | dito | 1-/¯4'-Fluor-6'-(4"-methyl-2"-sulfoanilino)-s-triazin-2'-yl_7-amino-3,6-disulfo-8-naphthol | dunkelblau |
| 14 | dito | 7-Amino-1-naphthol-3-sulfonsäure | 1-/¯4'-Fluor-6'-(4"-sulfophenylamino)-s-triazin-2'-yl_7-amino-3,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 15 | 4-ß-Sulfatoäthyl-sulfonyl-2-amino-phenol-6-sulfonsäure | 7-Amino-1-naphthol-3-sulfonsäure | 1-[4'-Fluor-6'-(phenylamino)-s-triazin-2'-yl]-amino-3,6-disulfo-8-naphthol | dunkelblau |
| 16 | dito | dito | 1-[4'-Fluor-6'-(p-toluidino)-s-triazin-2'-yl]-amino-3,6-disulfo-8-naphthol | dunkelblau |
| 17 | dito | dito | 1-[4'-Fluor-6'-(2"-chloranilino)-s-triazin-2'-yl]-amino-3,6-disulfo-8-naphthol | dunkelblau |
| 18 | dito | dito | 1-[4'-Fluor-6'-(3"-carboxyanilino)-s-triazin-2'-yl]-amino-3,6-disulfo-8-naphthol | dunkelblau |
| 19 | dito | dito | 1-[4'-Fluor-6'-(4"-ß-sulfatoethyl-sulfonyl-anilino)-s-triazin-2'-yl]-amino-3,6-disulfo-8-naphthol | marineblau |
| 20 | dito | dito | 1-[4'-Fluor-6'-(2",4"-disulfoanilino)-s-triazin-2'-yl]-amino-3,6-disulfo-8-naphthol | dunkelblau |
| 21 | dito | dito | 1-[4'-Fluor-6'-(4"-methyl-2"-sulfo-anilino)-s-triazin-2'-yl]-amino-3,6-disulfo-8-naphthol | dunkelblau |
| 22 | dito | 6-Amino-1-naphthol-3,5-disulfonsäure | 1-[4'-Fluor-6'-(3"-sulfophenylamino)-s-triazin-2'-yl]-amino-3,6-disulfo-8-naphthol | blau |
| 23 | dito | dito | 1-[4'-Fluor-6'-(4"-sulfophenylamino)-s-triazin-2'-yl]-amino-3,6-disulfo-8-naphthol | blau |
| 24 | dito | dito | 1-[4'-Fluor-6'-(p-toluidino)-s-triazin-2'-yl]-amino-3,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 25 | 4-ß-Sulfatoäthyl-sulfonyl-2-amino-phenol-6-sulfonsäure | 6-Amino-1-naphthol-3,5-disulfonsäure | 1-[4'-Fluor-6'-(2"-chloranilino)-s-triazin-2'-yl]-amino-3,6-disulfo-8-naphthol | dunkelblau |
| 26 | dito | dito | 1-[4'-Fluor-6'-(3"-carboxyanilino)-s-triazin-2'-yl]-amino-3,6-disulfo-8-naphthol | dunkelblau |
| 27 | dito | dito | 1-[4'-Fluor-6'-(4"-ß-sulfatoethyl-sulfonylanilino)-s-triazin-2'-yl]-amino-3,6-disulfo-8-naphthol | blau |
| 28 | dito | dito | 1-[4'-Fluor-6'-(2",4"-disulfo-anilino)-s-triazin-2'-yl]-amino-3,6-disulfo-8-naphthol | blau |
| 29 | dito | dito | 1-[4'-Fluor-6'-(4"-methyl-2"-sulfo-anilino)-s-triazin-2'-yl]-amino-3,6-disulfo-8-naphthol | blau |
| 30 | dito | 6-Amino-1-naphthol-3,5-disulfosäure | 1-[4'-Fluor-6'-(3",6"-disulfonaph-thyl-1"-amino)-s-triazin-2'-yl]-amino-3,6-disulfo-8-naphthol | dunkelblau |
| 31 | dito | 7-Amino-1-naphthol-3,6-disulfonsäure | 1-[4'-Fluor-6'-(4"-sulfophenyl-anilino)-s-triazin-2'-yl]-amino-3,6-disulfo-8-naphthol | blau |
| 32 | dito | dito | 1-[4'-Fluor-6'-(3"-sulfophenyl-anilino)-s-triazin-2'-yl]-amino-3,6-disulfo-8-naphthol | blau |
| 33 | dito | dito | 1-[4'-Fluor-6'-(phenylamino)-s-triazin-2'-yl]-amino-3,6-disulfo-8-naphthol | blau |
| 34 | dito | dito | 1-[4'-Fluor-6'-(p-toluidino)-s-triazin-2'-yl]-amino-3,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 35 | 4-ß-Sulfatoäthyl-sulfonyl-2-amino-phenol-6-sulfonsäure | 7-Amino-1-naphthol-3,6-disulfonsäure | 1-/¯4'-Fluor-6'-(2"-chloranilino)-s-triazin-2'-yl_7-amino-3,6-disulfo-8-naphthol | dunkelblau |
| 36 | dito | dito | 1-/¯4'-Fluor-6'-(3"-carboxyanilino)-s-triazin-2'-yl_7-amino-3,6-disulfo-8-naphthol | dunkelblau |
| 37 | dito | dito | 1-/¯4'-Fluor-6'-(4"-ß-sulfatoethyl-sulfonyl-anilino)-s-triazin-2'-yl_7-amino-3,6-disulfo-8-naphthol | dunkelblau |
| 38 | dito | dito | 1-/¯4'-Fluor-6'-(2",4"-disulfo-anilino)-s-triazin-2'-yl_7-amino-3,6-disulfo-8-naphthol | dunkelblau |
| 39 | dito | dito | 1-/¯4'-Fluor-6'-(4"-methyl-2"-sulfoanilino)-s-triazin-2'-yl_7-amino-3,6-disulfo-8-naphthol | dunkelblau |
| 40 | dito | 7-Amino-1-naphthol-3,6-disulfosäure | 1-/¯4'-Fluor-6'-(3",6"-disulfonaph-thyl-1"-amino)-s-triazin-2'-yl_7-amino-3,6-disulfo-8-naphthol | dunkelblau |
| 41 | dito | 6-Amino-1-naphthol-3-sulfonsäure | 1-/¯4'-Fluor-6'-(4"-sulfoanilino)-s-triazin-2'-yl_7-amino-4,6-disulfo-8-naphthol | dunkelblau |
| 42 | dito | dito | 1-/¯4'-Fluor-6'-(3"-sulfoanilino)-s-triazin-2'-yl_7-amino-4,6-disulfo-8-naphthol | dunkelblau |
| 43 | dito | dito | 1-/¯4'-Fluor-6'-(p-toluidino)-s-triazin-2'-yl_7-amino-4,6-disulfo-8-naphthol | dunkelblau |
| 44 | dito | dito | 1-/¯4'-Fluor-6'-(2"-chloranilino)-s-triazin-2'-yl_7-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 45 | 4-ß-Sulfatoäthyl-sulfonyl-2-amino-phenol-6-sulfonsäure | 6-Amino-1-naphthol-3-sulfonsäure | 1-[4'-Fluor-6'-(3"-carboxyanilino)-s-triazin-2'-yl]-amino-4,6-disulfo-8-naphthol | dunkelblau |
| 46 | dito | dito | 1-[4'-Fluor-6'-(4"-ß-sulfatoethyl-sulfonyl-anilino)-s-triazin-2'-yl]-amino-4,6-disulfo-8-naphthol | dunkelblau |
| 47 | dito | dito | 1-[4'-Fluor-6'-(2",4"-disulfoanilino)-s-triazin-2'-yl]-amino-4,6-disulfo-8-naphthol | dunkelblau |
| 48 | dito | dito | 1-[4'-Fluor-6'-(4"-methyl-2"-sulfo-anilino)-s-triazin-2'-yl]-amino-4,6-disulfo-8-naphthol | dunkelblau |
| 49 | dito | dito | 1-[4'-Fluor-6'-(3",6"-disulfonaph-thyl-1"-amino)-s-triazin-2-yl]-amino-4,6-disulfo-8-naphthol | dunkelblau |
| 50 | dito | 7-Amino-1-naphthol-3-sulfonsäure | 1-[4'-Fluor-6'-(4"-sulfoanilino)-s-triazin-2-yl]-amino-4,6-disulfo-8-naphthol | dunkelblau |
| 51 | dito | dito | 1-[4'-Fluor-6'-(3"-sulfoanilino)-s-triazin-2'-yl]-amino-4,6-disulfo-8-naphthol | dunkelblau |
| 52 | dito | dito | 1-[4'-Fluor-6'-(phenylamino)-s-triazin-2'-yl]-amino-4,6-disulfo-8-naphthol | dunkelblau |
| 53 | dito | dito | 1-[4'-Fluor-6'-(p-toluidino)-s-triazin-2'-yl]-amino-4,6-disulfo-8-naphthol | dunkelblau |
| 54 | dito | dito | 1-[4'-Fluor-6'-(2"-chloranilino)-s-triazin-2'-yl]-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 55 | 4-ß-Sulfatoäthyl-sulfonyl-2-amino-phenol-6-sulfonsäure | 7-Amino-1-naphthol-3-sulfonsäure | 1-[4'-Fluor-6'-(3"-carboxyanilino)-s-triazin-2'-yl]-amino-4,6-disulfo-8-naphthol | dunkelblau |
| 56 | dito | dito | 1-[4'-Fluor-6'-(4"-ß-sulfatoethyl-sulfonyl-anilino)-s-triazin-2'-yl]-amino-4,6-disulfo-8-naphthol | dunkelblau |
| 57 | dito | dito | 1-[4'-Fluor-6'-(4"-methyl-2"-sulfo-anilino)-s-triazin-2-yl]-amino-4,6-disulfo-8-naphthol | dunkelblau |
| 58 | dito | dito | 1-[4'-Fluor-6'-(3",6"-disulfonaph-thyl-1"-amino)-s-triazin-2-yl]-amino-4,6-disulfo-8-naphthol | dunkelblau |
| 59 | dito | 6-Amino-1-naphthol-3,5-disulfonsäure | 1-[4'-Fluor-6'-(4"-sulfoanilino)-s-triazin-2'-yl]-amino-4,6-disulfo-8-naphthol | dunkelblau |
| 60 | dito | dito | 1-[4'-Fluor-6'-(3"-sulfoanilino)-s-triazin-2'-yl]-amino-4,6-disulfo-8-naphthol | dunkelblau |
| 61 | dito | dito | 1-[4'-Fluor-6'-(phenylamino)-s-triazin-2'-yl]-amino-4,6-disulfo-8-naphthol | dunkelblau |
| 62 | dito | dito | 1-[4'-Fluor-6'-(p-toluidino)-s-triazin-2'-yl]-amino-4,6-disulfo-8-naphthol | dunkelblau |
| 63 | dito | dito | 1-[4'-Fluor-6'-(2"-chloranilino)-s-triazin-2'-yl]-amino-4,6-disulfo-8-naphthol | dunkelblau |
| 64 | dito | dito | 1-[4'-Fluor-6'-(3"-carboxyanilin)-s-triazin-2'-yl]-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 65 | 4-ß-Sulfatoäthyl-sulfonyl-2-amino-phenol-6-sulfonsäure | 6-Amino-1-naphthol-3,5-disulfonsäure | 1-/¯4'-Fluor-6'-(4"-ß-sulfatoethyl-sulfonyl-anilino)-s-triazin-2'-yl_7-amino-4,6-disulfo-8-naphthol | dunkelblau |
| 66 | dito | dito | 1-/¯4'-Fluor-6'-(2",4"-disulfoanilino)-s-triazin-2'-yl_7-amino-4,6-disulfo-8-naphthol | dunkelblau |
| 67 | dito | dito | 1-/¯4'-Fluor-6'-(4"-methyl-2"-sulfo-anilino)-s-triazin-2'-yl_7-amino-4,6-disulfo-8-naphthol | dunkelblau |
| 68 | dito | dito | 1-/¯4'-Fluor-6'-(3",6"-disulfonaph-thyl-1"-amino)-s-triazin-2'-yl_7-amino-4,6-disulfo-8-naphthol | dunkelblau |
| 69 | dito | 7-Amino-1-naphthol-3,6-disulfonsäure | 1-/¯4'-Fluor-6'-(4"-sulfoanilino)-s-triazin-2'-yl_7-amino-4,6-disulfo-8-naphthol | dunkelblau |
| 70 | dito | dito | 1-/¯4'-Fluor-6'-(3"-sulfoanilino)-s-triazin-2'-yl_7-amino-4,6-disulfo-8-naphthol | dunkelblau |
| 71 | dito | dito | 1-/¯4'-Fluor-6'-(phenylamino)-s-triazin-2'-yl_7-amino-4,6-disulfo-8-naphthol | dunkelblau |
| 72 | dito | dito | 1-/¯4'-Fluor-6'-(p-toluidino)-s-triazin-2'-yl_7-amino-4,6-disulfo-8-naphthol | dunkelblau |
| 73 | dito | dito | 1-/¯4'-Fluor-6'-(2"-chloranilino)-s-triazin-2'-yl_7-amino-4,6-disulfo-8-naphthol | dunkelblau |
| 74 | dito | dito | 1-/¯4'-Fluor-6'-(3"-carboxyanilino)-s-triazin-2-yl_7-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 75 | 4-ß-Sulfatoäthyl-sulfonyl-2-amino-phenol-6-sulfonsäure | 7-Amino-1-naphthol-3,6-disulfonsäure | 1-[4'-Fluor-6'-(4"-ß-sulfatoethyl-sulfonylanilino)-s-triazin-2'-yl]-amino-4,6-disulfo-8-naphthol | dunkelblau |
| 76 | dito | dito | 1-[4'-Fluor-6'-(2",4"-disulfo-anilino)-s-triazin-2'-yl]-amino-4,6-disulfo-8-naphthol | dunkelblau |
| 77 | dito | dito | 1-[4'-Fluor-6'-(4"-methyl-2"-sulfo-anilino)-s-triazin-2'-yl]-amino-4,6-disulfo-8-naphthol | dunkelblau |
| 78 | dito | dito | 1-[4'-Fluor-6'-(3",6"-disulfonaph-thyl-1"-amino)-s-triazin-2'-yl]-amino-4,6-disulfo-8-naphthol | dunkelblau |
| 79 | dito | 6-Amino-1-naphthol-3-sulfosäure | 1-[4'-Fluor-6'-(3",6"-disulfonaph-thyl-1"-amino)-s-triazin-2'-yl]-amino-3,6-disulfo-8-naphthol | dunkelblau |
| 80 | dito | 7-Amino-1-naphthol-3-sulfonsäure | 1-[4'-Fluor-6'-(3",6"-disulfonaph-thyl-1"-amino)-s-triazin-2'-yl]-amino-3,6-disulfo-8-naphthol | dunkelblau |
| 81 | dito | 6-Amino-1-naphthol-3-sulfonsäure | 1-[4'-Fluor-6'-(phenylamino)-s-triazin-2'-yl]-amino-4,6-disulfo-8-naphthol | dunkelblau |
| 82 | dito | 7-Amino-1-naphthol-3-sulfonsäure | 1-[4'-Fluor-6'-(2",4"-disulfoanilino)-s-triazin-2'-yl]-amino-4,6-disulfo-8-naphthol | dunkelblau |
| 83 | 4-ß-Thiosulfatoäthyl-sulfonyl-2-amino-phenol-6-sulfonsäure | 6-Amino-1-naphthol-3-sulfonsäure | 1-[4'-Fluor-6'-(3"-sulfophenylamino)-s-triazin-2'yl]-amino-3,6-disulfo-8-naphthol | dunkelblau |
| 84 | 4-Vinylsulfonyl-2-amino-phenol-6-sulfonsäure | dito | dito | dunkelblau |

| Bsp. | Aminophenol (10 | Aminonaphthol-sulfonsäure (13) | Fluortriazinylaminonaphthol (4) | Nuance |
|---|---|---|---|---|
| 85 | 4-Vinylsulfonyl-2-amino-phenol-6-sulfonsäure | 7-Amino-1-naphthol-3-sulfonsäure | 1-[4'-Fluor-6'-(3"-sulfophenylamino)-s-triazin-2'-yl]-amino-3,6-disulfo-8-naphthol | dunkelblau |
| 86 | 4-ß-Thiosulfato-äthylsulfonyl-2-amino-phenol-6-sulfonsäure | dito | dito | dunkelblau |
| 87 | dito | 6-Amino-1-naphthol-3-sulfonsäure | 1-[4'-Fluor-6'-(4"-sulfophenylamino)-s-triazin-2'-yl]-amino-3,6-disulfo-8-naphthol | dunkelblau |
| 88 | 4-Vinylsulfonyl-2-amino-phenol-6-sulfonsäure | dito | dito | dunkelblau |
| 89 | dito | dito | 1-[4'-Fluor-6'-(2"-chloranilino)-s-triazin-2'-yl]-amino-3,6-disulfo-8-naphthol | dunkelblau |
| 90 | dito | dito | 1-[4'-Fluor-6'-(4"-ß-sulfatoethyl-sulfonyl-anilino)-s-triazin-2'-yl]-amino-3,6-disulfo-8-naphthol | marineblau |
| 91 | dito | 7-Amino-1-naphthol-3-sulfonsäure | 1-[4'-Fluor-6'-(phenylamino)-s-triazin-2'-yl]-amino-3,6-disulfo-8-naphthol | dunkelblau |
| 92 | dito | 6-Amino-1-naphthol-3,5-disulfonsäure | 1-[4'-Fluor-6'-(2"-chloranilino)-s-triazin-2'-yl]-amino-3,6-disulfo-8-naphthol | dunkelblau |
| 93 | 4-Vinylsulfonyl-2-aminophenol-6-sulfonsäure | dito | dito | dunkelblau |
| 94 | dito | 7-Amino-1-naphthol-3,6-disulfonsäure | 1-[4'-Fluor-6'-(3"-sulfophenyl-anilino)-s-triazin-2'-yl]-amino-3,6-disulfo-8-naphthol | blau |

| Bsp. | Aminophenol (10) | Aminonaphthol-sulfonsäure 13 | Fluortriazinylaminonaphthol (4) | Nuance |
|---|---|---|---|---|
| 95 | 4-ß-Thiosulfatoäthyl-sulfonyl-2-amino-phenol-6-sulfonsäure | 7-Amino-1-naphthol-3,6-disulfonsäure | 1-[4'-Fluor-6'-(3"-sulfophenyl-anilino)-s-triazin-2'-yl]-amino-3,6-disulfo-8-naphthol | blau |
| 96 | dito | dito | 1-[4'-Fluor-6'-(phenylamino)-s-triazin-2'-yl]-amino-3,6-disulfo-8-naphthol | blau |
| 97 | 4-Vinylsulfonyl-2-aminophenol-6-sulfonsäure | dito | dito | blau |
| 98 | dito | 6-Amino-1-naphthol-3-sulfonsäure | 1-[4'-Fluor-6'-(3"-sulfoanilino)-s-triazin-2'-yl]-amino-4,6-disulfo-8-naphthol | dunkelblau |
| 99 | 4-ß-Thiosulfatoäthyl-sulfonyl-2-amino-phenol-6-sulfonsäure | dito | dito | dunkelblau |
| 100 | 4-Vinylsulfonyl-2-aminophenol-6-sulfonsäure | dito | 1-[4'-Fluor-6'-(3"-carboxyanilino)-s-triazin-2'-yl]-amino-4,6-disulfo-8-naphthol | dunkelblau |
| 101 | 4-ß-Thiosulfatoäthyl-sulfonyl-2-amino-phenol-6-sulfonsäure | dito | dito | dunkelblau |
| 102 | dito | dito | 1-[4'-Fluor-6'-(4"-ß-sulfatoethyl-sulfonyl-anilino)-s-triazin-2'-yl]-amino-4,6-disulfo-8-naphthol | dunkelblau |
| 103 | 4-Vinylsulfonyl-2-aminophenol-6-sulfonsäure | dito | dito | dunkelblau |
| 104 | dito | 7-Amino-1-naphthol-3-sulfonsäure | 1-[4'-Fluor-6'-(4"-sulfoanilino)-s-triazin-2-yl]-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 105 | 4-ß-Thiosulfatoäthyl-sulfonyl-2-amino-phenol-6-sulfonsäure | 7-Amino-1-naphthol-3-sulfonsäure | 1-[4'-Fluor-6'-(4"-sulfoanilino)-s-triazin-2-yl]-amino-4,6-disulfo-8-naphthol | dunkelblau |
| 106 | dito | dito | 1-[4'-Fluor-6'-(3"-sulfoanilino)-s-triazin-2'-yl]-amino-4,6-disulfo-8-naphthol | dunkelblau |
| 107 | 4-Vinylsulfonyl-2-aminophenol-6-sulfonsäure | dito | dito | dunkelblau |
| 108 | dito | 6-Amino-1-naphthol-3,5-disulfonsäure | 1-[4'-Fluor-6'-(4"-ß-sulfatoethyl-sulfonyl-anilino)-s-triazin-2'-yl]-amino-4,6-disulfo-8-naphthol | dunkelblau |
| 109 | dito | 7-Amino-1-naphthol-3,6-disulfonsäure | 1-[4'-Fluor-6'-(3"-sulfoanilino)-s-triazin-2'-yl]-amino-4,6-disulfo-8-naphthol | dunkelblau |
| 110 | 4-ß-Thiosulfatoäthyl-sulfonyl-2-amino-phenol-6-sulfonsäure | dito | dito | dunkelblau |
| 111 | dito | 7-Amino-1-naphthol-3,6-disulfonsäure | 1-[4'-Fluor-6'-(3",6"-disulfonaph-thyl-1"-amino)-s-triazin-2'-yl]-amino-4,6-disulfo-8-naphthol | dunkelblau |
| 112 | 4-Vinylsulfonyl-2-aminophenol-6-sulfonsäure | dito | dito | dunkelblau |
| 113 | dito | 6-Amino-1-naphthol-3-sulfosäure | 1-[4'-Fluor-6'-(3",6"-disulfonaph-thyl-1"-amino)-s-triazin-2'-yl]-amino-3,6-disulfo-8-naphthol | dunkelblau |
| 114 | 4-ß-Thiosulfatoäthyl-sulfonyl-2-amino-phenol-6-sulfonsäure | dito | dito | dunkelblau |

| Bsp. | Aminophenol (10) | Aminonaphthol-sulfonsäure (13) | Fluortriazinylaminonaphthol (4) | Nuance |
|---|---|---|---|---|
| 115 | 4-ß-Thiosulfatoäthyl-sulfonyl-2-amino-phenol-6-sulfonsäure | 7-Amino-1-naphthol-3-sulfonsäure | 1-/¯4'-Fluor-6'-(2",4"-disulfoanilin)-s-triazin-2'-yl_7-amino-4,6-disulfo-8-naphthol | dunkelblau |
| 116 | 4-Vinylsulfonyl-2-aminophenol-6-sulfonsäure | dito | dito | dunkelblau |

**Beispiel 117**

a) Eine Lösung mit einem pH-Wert zwischen 5,5 und 6,0 und einer Temperatur von 0 bis 3°C von 16,0 Teilen 1-Amino-3,6-disulfo-8-naphthol in 300 Teilen Wasser werden während einiger Minuten langsam und unter Rühren mit 6,8 Teilen Cyanurfluorid versetzt; hierbei wird der pH-Wert mittels einer 20%igen wäßrigen Natriumcarbonatlösung zwischen 4 und 4,5 und die Temperatur zwischen 0 und 5°C gehalten. Es wird sodann noch einige Minuten nachgerührt.

Anschließend wird dieser Ansatz langsam während einiger Minuten in 100 Volumenteile einer 6 - 7 %igen wäßrigen Ammoniaklösung mit einer Temperatur von 0 bis 5°C gegeben. Man rührt noch etwa 30 Minuten bei 0 bis 5°C nach und stellt sodann den pH-Wert mittels Salzsäure auf 6,5 bis 7,0.

b) Eine wäßrige Lösung mit einem pH-Wert zwischen 5,5 und 6 und einer Temperater von 0 bis 3°C aus 18,9 Teilen 4-β-Sulfatoäthylsulfonyl-2-aminophenol-6-sulfonsäure in 80 Teilen Wasser werden mit 10,5 Volumenteilen einer wäßrigen 5n-Natriumnitritlösung versetzt; dieses Gemisch wird sodann unter Rühren auf ein Gemisch aus 13 Volumenteilen einer 31 %igen wäßrigen Salzsäure und 100 Teilen Eis gegossen. Man rührt bei einer Temperatur von 0 bis 5°C noch 30 Minuten nach und zerstört überschüssige salpetrige Säure in üblicher Weise. Es wird sodann mit Natriumbicarbonat ein pH-Wert von 5,8 bis 6,2 eingestellt.

Sodann trägt man 12,0 Teile 6-Amino-1-naphthol-3-sulfon-säure ein und hält den pH-Wert auf 6,5 bis 6,8. Man rührt noch bei etwa 5 bis 10°C weiter, bis eine Probe auf die Kupplungskomponente oder Diazoniumverbindung negativ ausfällt. Danach gibt man 11,0 Volumenteile einer wäßrigen 5n-Natriumnitritlösung hinzu und läßt dieses Gemisch unter gutem Rühren auf ein Gemisch aus 15 Volumenteilen einer 31 %igen wäßrigen Salzsäure und 300 Teilen Eis laufen. Es wird bei 0 bis 5°C noch etwa 1 Stunde nachgerührt und überschüssige salpetrige Säure anschließend wie üblich zerstört. Man stellt den Ansatz sodann mit Natriumbicarbonat auf einen pH-Wert von 6 bis 6,5.

c) Die unter b) hergestellte Diazoniumsalzlösung der Aminoazoverbindung gibt man bei einer Temperatur von etwa 5°C zu der unter a) hergestellten Lösung des sekundären Kondensationsproduktes. Man rührt bei 5 bis 10°C und einem pH-Wert zwischen 5,5 und 6,0 bis zur Beendigung der Kupplungsreaktion weiter.

Zu der Lösung dieser hergestellten Disazoverbindung gibt man sodann 13,0 Teile kristallisiertes Kupfersulfat und 9,0 Teile kristallisiertes Natriumacetat und rührt den Ansatz bei 25 bis 30°C und einem pH-Wert von etwa 5,0 noch etwa 2 Stunden nach. Überschüssige Kupferionen werden anschließend durch Zugabe von 3 Teilen Natriumoxalat als Kupferoxalat gefällt und anschließend beim Klären mittels 5 Teilen Kieselgur mit abfiltriert.

Die hergestellte erfindungsgemäße Kupferkomplex-Disazoverbindung der Formel (in Form der freien Säure geschrieben)

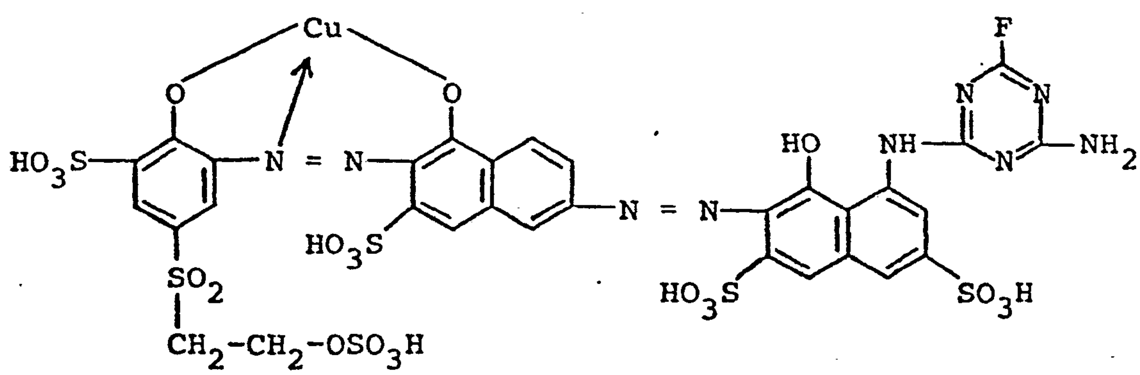

wird aus der Syntheselösung durch Zugabe von 350 Teilen Kaliumchlorid als Alkalimetallsalz, insbesondere Kaliumsalz, ausgefällt und isoliert.

Diese erfindungsgemäße Kupferkomplex-Disazoverbindung zeigt sehr gute faserreaktive Farbstoffeigenschaften und färbt die in der Beschreibung genannten Materialien, beispielsweise Baumwolle, nach den in der Technik üblichen Anwendungsmethoden, insbesondere nach den für faserreaktive Farbstoffe üblichen Applikations- und Fixierverfahren in der Färberei und in den Druckverfahren, in klaren farbstarken, dunkelblauen Nuancen mit sehr guten Echtheiten, wovon insbesondere die Licht-, Wasch-, Wasser- und Schweißechtheiten sowie die Chlorbadewasserechtheit, die Lösemittelechtheit und die Reibechtheit hervorgehoben werden können.

**Beispiele 118 bis 185**

In den nachfolgenden Tabellenbeispielen sind weitere erfindungsgemäße Kupferkomplex-Disazoverbindungen beschrieben, die durch ihre Ausgangskomponenten (einem Aminophenol entsprechend der allgemeinen Formel (10) als Diazokomponente, einer Aminonaphtholsulfonsäure entsprechend der allgemeinen Formel (13) als kupplungsfähige und diazotierbare Mittelkomponente und einer 1-Fluortriazinylamino-8-naphthol-3,6-oder -4,6-disulfonsäure entsprechend der allgemeinen Formel (4) als endständige Kupplungskomponente) charakterisiert sind. Sie können in erfindungsgemäßer Weise, beispielsweise gemäß der im Beispiel 117 angegebenen Verfahrensweise durch Umsetzung dieser Ausgangsverbindungen und anschließende Kupferung mit einer kupferabgebenden Verbindung, hergestellt werden.

Diese erfindungsgemäßen Kupferkomplex-Disazoverbindungen besitzen ebenfalls sehr gute faserreaktive Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien nach den für faserreaktive Farbstoffe üblichen Applikations- und Fixiermethoden, mit hohen Farbstärken und guten Echtheiten in der in dem jeweiligen Tabellenbeispiel angegebenen Nuance auf beispielsweise Baumwolle.

Diese Ausgangsverbindungen sind in Form der freien Säure genannt; sie können als solche, ebenso auch in Form ihrer Salze, vorzugsweise Alkalimetallsalze, wie Natrium- oder Kaliumsalze, in die Synthese eingesetzt werden.

| Bsp. | Aminophenol entspr. Formel (10) | Aminonaphtholsulfonsäure entspr. Formel (13) | Fluortriazinylamino-naphthol entspr. Formel (4) | Nuance auf Baumwolle |
|---|---|---|---|---|
| 118 | 4-ß-Sulfatoäthyl-sulfonyl-2-amino-phenol-6-sulfonsäure | 6-Amino-1-naphthol-3-sulfonsäure | 1-/¯4'-Fluor-6'-methylamino--s-triazin-2'-yl_7-amino-3,6-disulfo-8-naphthol | dunkelblau |
| 119 | dito | dito | 1-/¯4'-Fluor-6'-dimethylamino-s-triazin-2'-yl_7-amino-3,6-disulfo-8-naphthol | dunkelblau |
| 120 | dito | dito | 1-/¯4'-Fluor-6'-(N-ß-sulfo-ethyl-N-methylamino)-s-triazin-2'-yl_7-amino-3,6-disulfo-8-naphthol | dunkelblau |
| 121 | dito | dito | 1-/¯4'-Fluor-6'-(N-ß-hydroxy-ethyl-amino)-s-triazin-2'-yl_7-amino-3,6-disulfo-8-naphthol | dunkelblau |
| 122 | dito | dito | 1-/¯4'-Fluor-6'-(N-ß-sulfato-ethylamino)-s-triazin-2'-yl_7-amino-3,6-disulfo-8-naphthol | dunkelblau |
| 123 | dito | 7-Amino-1-naphthol-3-sulfonsäure | 1-/¯4'-Fluor-6'-amino-s-triazin-2'-yl_7-amino-3,6-disulfo-8-naphthol | dunkelblau |
| 124 | dito | dito | 1-/¯4'-Fluor-6'-methylamino-s-triazin-2'-yl_7-amino-3,6-disulfo-8-naphthol | dunkelblau |
| 125 | dito | dito | 1-/¯4'-Fluor-6'-dimethylamino-s-triazin-2'-yl_7-amino-3,6-disulfo-8-naphthol | dunkelblau |
| 126 | dito | dito | 1-/¯4'-Fluor-6'-(N-ß-sulfo-ethyl-N-methylamino)-s-triazin-2'-yl_7-amino-3,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 127 | 4-ß-Sulfatoäthyl-sulfonyl-2-amino-phenol-6-sulfonsäure | 7-Amino-1-naphthol-3-sulfonsäure | 1-[4'-Fluor-6'-(N-ß-hydroxyethyl-amino)-s-triazin-2'-yl]-amino-3,6-disulfo-8-naphthol | dunkelblau |
| 128 | dito | dito | 1-[4'-Fluor-6'-(N-ß-sulfatoethyl-amino)-s-triazin-2'-yl]-amino-3,6-disulfo-8-naphthol | dunkelblau |
| 129 | dito | 6-Amino-1-naphthol-3,5-disulfonsäure | 1-[4'-Fluor-6'-amino-s-triazin-2'-yl]-amino-3,6-disulfo-8-naphthol | dunkelblau |
| 130 | dito | dito | 1-[4'-Fluor-6'-methylamino-s-triazin-2'-yl]-amino-3,6-disulfo-8-naphthol | dunkelblau |
| 131 | dito | dito | 1-[4'-Fluor-6'-dimethylamino-s-triazin-2'-yl]-amino-3,6-disulfo-8-naphthol | dunkelblau |
| 132 | dito | dito | 1-[4'-Fluor-6'-(N-ß-sulfoethyl-N-methylamino)-s-triazin-2'-yl]-amino-3,6-disulfo-8-naphthol | dunkelblau |
| 133 | dito | dito | 1-[4'-Fluor-6'-(N-ß-hydroxyethyl-amino)-s-triazin-2'-yl]-amino-3,6-disulfo-8-naphthol | dunkelblau |
| 134 | dito | dito | 1-[4'-Fluor-6'-(N-ß-sulfatoethyl-amino)-s-triazin-2'-yl]-amino-3,6-disulfo-8-naphthol | dunkelblau |
| 135 | dito | 7-Amino-1-naphthol-3,6-disulfonsäure | 1-[4'-Fluor-6'-amino-s-triazin-2'-yl]-amino-3,6-disulfo-8-naphthol | dunkelblau |
| 136 | dito | dito | 1-[4'-Fluor-6'-methylamino-s-triazin-2'-yl]-amino-3,6-disulfo-8-naphthol | dunkelblau |
| 137 | dito | dito | 1-[4'-Fluor-6'-dimethylamino-s-triazin-2'-yl]-amino-3,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 138 | 4-ß-Sulfatoäthyl-sulfonyl-2-amino-phenol-6-sulfonsäure | 7-Amino-1-naphthol-3,6-disulfonsäure | 1-[4'-Fluor-6'-(N-ß-sulfoethyl-N-methylamino)-s-triazin-2'-yl]-amino-3,6-disulfo-8-naphthol | dunkelblau |
| 139 | dito | dito | 1-[4'-Fluor-6'-(N-ß-hydroxyethyl-amino)-s-triazin-2'-yl]-amino-3,6-disulfo-8-naphthol | dunkelblau |
| 140 | dito | dito | 1-[4'-Fluor-6'-(N-ß-sulfatoethyl-amino)-s-triazin-2'-yl]-amino-3,6-disulfo-8-naphthol | dunkelblau |
| 141 | dito | 6-Amino-1-naphthol-3-sulfonsäure | 1-[4'-Fluor-6'-amino-s-triazin-2'-yl]-amino-4,6-disulfo-8-naphthol | dunkelblau |
| 142 | dito | dito | 1-[4'-Fluor-6'-methylamino-s-triazin-2'-yl]-amino-4,6-disulfo-8-naphthol | dunkelblau |
| 143 | dito | dito | 1-[4'-Fluor-6'-dimethylamino-s-triazin-2'-yl]-amino-4,6-disulfo-8-naphthol | dunkelblau |
| 144 | dito | dito | 1-[4'-Fluor-6'-(N-ß-sulfoethyl-N-methylamino-s-triazin-2'-yl]-amino-4,6-disulfo-8-naphthol | dunkelblau |
| 145 | dito | dito | 1-[4'-Fluor-6'-(N-ß-hydroxyethyl-amino)-s-triazin-2'-yl]-amino-4,6-disulfo-8-naphthol | dunkelblau |
| 146 | dito | dito | 1-[4'-Fluor-6'-(N-ß-sulfatoethyl-amino)-s-triazin-2'-yl]-amino-4,6-disulfo-8-naphthol | dunkelblau |
| 147 | dito | 7-Amino-1-naphthol-3-sulfonsäure | 1-[4'-Fluor-6'-amino-s-triazin-2'-yl]-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 148 | 4-ß-Sulfatoäthyl-sulfonyl-2-amino-phenol-6-sulfonsäure | 7-Amino-1-naphthol-3-sulfonsäure | 1-/¯4'-Fluor-6'-methylamino-s-triazin-2'-yl_7-amino-4,6-disulfo-8-naphthol | dunkelblau |
| 149 | dito | dito | 1-/¯4'-Fluor-6'-dimethylamino-s-triazin-2-yl_7-amino-4,6-disulfo-8-naphthol | dunkelblau |
| 150 | dito | dito | 1-/¯4'-Fluor-6'-(N-ß-sulfoethyl-N-methylamino)-s-triazin-2'-yl_7-amino-4,6-disulfo-8-naphthol | dunkelblau |
| 151 | dito | dito | 1-/¯4'-Fluor-6'-(N-ß-hydroxyethyl-amino-s-triazin-2'-yl_7-amino-4,6-disulfo-8-naphthol | dunkelblau |
| 152 | dito | dito | 1-/¯4'-Fluor-6'-(N-ß-sulfatoethyl-amino)-s-triazin-2'-yl_7-amino-4,6-disulfo-8-naphthol | dunkelblau |
| 153 | dito | 6-Amino-1-naphthol-3,5-disulfonsäure | 1-/¯4'-Fluor-6'-amino-s-triazin-2'-yl_7-amino-4,6-disulfo-8-naphthol | dunkelblau |
| 154 | dito | dito | 1-/¯4'-Fluor-6'-methylamino-s-triazin-2'-yl_7-amino-4,6-disulfo-8-naphthol | dunkelblau |
| 155 | dito | dito | 1-/¯4'-Fluor-6'-dimethylamino-s-triazin-2'-yl_7-amino-4,6-disulfo-8-naphthol | dunkelblau |
| 156 | dito | dito | 1-/¯4'-Fluor-6'-(N-ß-sulfoethyl-N-methylamino)-s-triazin-2'-yl_7-amino-4,6-disulfo-8-naphthol | dunkelblau |
| 157 | dito | dito | 1-/¯4'-Fluor-6'-(N-ß-hydroxyethyl-amino)-s-triazin-2'-yl_7-amino-4,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 158 | 4-ß-Sulfatoäthyl-sulfonyl-2-amino-phenol-6-sulfonsäure | 6-Amino-1-naphthol-3,5-disulfonsäure | 1-/¯4'-Fluor-6'-(N-ß-sulfatoethyl-amino)-s-triazin-2'-yl_7-amino-4,6-disulfo-8-naphthol | dunkelblau |
| 159 | dito | 7-Amino-1-naphthol-3,6-disulfonsäure | 1-/¯4'-Fluor-6'-amino-s-triazin-2'-yl_7-amino-4,6-disulfo-8-naphthol | dunkelblau |
| 160 | dito | dito | 1-/¯4'-Fluor-6'-methylamino-s-triazin-2'-yl_7-amino-4,6-disulfo-8-naphthol | dunkelblau |
| 161 | dito | dito | 1-/¯4'-Fluor-6'-dimethylamino-s-triazin-2'-yl_7-amino-4,6-disulfo-8-naphthol | dunkelblau |
| 162 | dito | dito | 1-/¯4'-Fluor-6'-(N-ß-sulfoethyl-N-methylamino)-s-triazin-2'-yl_7-amino-4,6-disulfo-8-naphthol | dunkelblau |
| 163 | dito | dito | 1-/¯4'-Fluor-6'-(N-ß-hydroxyethyl-amino)-s-triazin-2'-yl_7-amino-4,6-disulfo-8-naphthol | dunkelblau |
| 164 | dito | dito | 1-/¯4'-Fluor-6'-(N-ß-sulfatoethyl-amino)-s-triazin-2'-yl_7-amino-4,6-disulfo-8-naphthol | dunkelblau |
| 165 | 4-Vinylsulfonyl-2-aminophenol-6-sulfonsäure | 6-Amino-1-naphthol-3-sulfonsäure | 1-/¯4'-Fluor-6'-amino-s-triazin-2'-yl_7-amino-3,6-disulfo-8-naphthol | dunkelblau |
| 166 | 4-ß-Thiosulfato-äthylsulfonyl-2-aminophenol-6-sulfonsäure | dito | dito | dunkelblau |
| 167 | dito | dito | 1-/¯4'-Fluor-6'-dimethylamino-s-triazin-2'-yl_7-amino-3,6-disulfo-8-naphthol | dunkelblau |

| Bsp. | Aminophenol (10) | Aminonaphthol-sulfonsäure (13) | Fluortriazinylaminonaphthol (4) | Nuance |
|---|---|---|---|---|
| 168 | 4-Vinylsulfonyl-2-aminophenol-6-sulfonsäure | 6-Amino-1-naphthol-3-sulfonsäure | 1-[4'-Fluor-6'-dimethylamino-s-triazin-2'-yl]-amino-3,6-disulfo-8-naphthol | dunkelblau |
| 169 | dito | dito | 1-[4'-Fluor-6'-(N-ß-sulfoethyl-N-methylamino)-s-triazin-2'-yl]-amino-3,6-disulfo-8-naphthol | dunkelblau |
| 170 | 4-ß-Thiosulfatoäthylsulfonyl-2-aminophenol-6-sulfonsäure | dito | dito | dunkelblau |
| 171 | 4-Vinylsulfonyl-2-aminophenol-6-sulfonsäure | 7-Amino-1-naphthol-3-sulfonsäure | 1-[4'-Fluor-6'-amino-s-triazin-2'-yl]-amino-3,6-disulfo-8-naphthol | dunkelblau |
| 172 | dito | dito | 1-[4'-Fluor-6'-(N-ß-hydroxyethylamino)-s-triazin-2'-yl]-amino-3,6-disulfo-8-naphthol | dunkelblau |
| 173 | dito | 6-Amino-1-naphthol-3,5-disulfonsäure | 1-[4'-Fluor-6'-amino-s-triazin-2'-yl]-amino-3,6-disulfo-8-naphthol | dunkelblau |
| 174 | dito | 7-Amino-1-napthol-3,6-disulfonsäure | 1-[4'-Fluor-6'-amino-s-triazin-2'-yl]-amino-3,6-disulfo-8-naphthol | dunkelblau |
| 175 | 4-ß-Thiosulfatoäthylsulfonyl-2-aminophenol-6-sulfonsäure | dito | dito | dunkelblau |
| 176 | dito | dito | 1-[4'-Fluor-6'-methylamino-s-triazin-2'-yl]-amino-3,6-disulfo-8-naphthol | dunkelblau |
| 177 | 4-Vinylsulfonyl-2-aminophenol-6-sulfonsäure | dito | dito | dunkelblau |

| Bsp. | Aminophenol (10) | Aminonaphthol-sulfonsäure (13) | Fluortriazinylaminonaphthol (4) | Nuance |
|---|---|---|---|---|
| 178 | 4-Vinylsulfonyl-2-aminophenol-6-sulfonsäure | 6-Amino-1-naphthol-3-sulfonsäure | 1-/¯4'-Fluor-6'-amino-s-triazin-2'-yl_7-amino-4,6-disulfo-8-naphthol | dunkelblau |
| 179 | dito | dito | 1-/¯4'-Fluor-6'-(N-ß-sulfoethyl-N-methyl-amino-s-triazin-2'-yl_7-amino-4,6-disulfo-8-naphthol | dunkelblau |
| 180 | 4-ß-Thiosulfato-äthylsulfonyl-2-aminophenol-6-sulfonsäure | dito | dito | dunkelblau |
| 181 | 4-Vinylsulfonyl-2-aminophenol-6-sulfonsäure | 7-Amino-1-naphthol-3-sulfonsäure | 1-/¯4'-Fluor-6'-amino-s-triazin-2'-yl_7-amino-4,6-disulfo-8-naphthol | dunkelblau |
| 182 | dito | dito | 1-/¯4'-Fluor-6'-(N-ß-sulfoethyl-N-methyl-amino)-s-triazin-2'-yl_7-amino-4,6-disulfo-8-naphthol | dunkelblau |
| 183 | 4-ß-Thiosulfato-äthylsulfonyl-2-aminophenol-6-sulfonsäure | dito | dito | dunkelblau |
| 184 | dito | 6-Amino-1-naphthol-3,5-disulfonsäure | 1-/¯4'-Fluor-6'-amino-s-triazin-2'-yl_7-amino-4,6-disulfo-8-naphthol | dunkelblau |
| 185 | 4-Vinylsulfonyl-2-aminophenol-6-sulfonsäure | dito | dito | dunkelblau |

**Patentansprüche:**

1. Wasserlösliche Kupferkomplex-Disazoverbindungen der allgemeinen Formel (1)

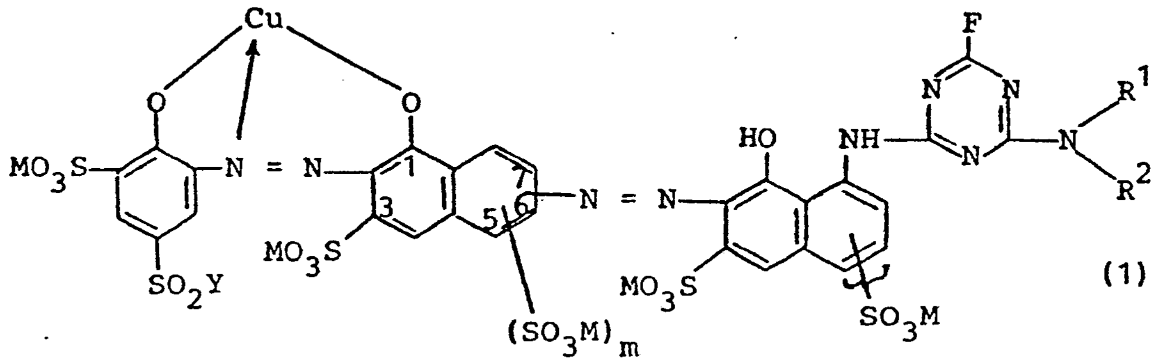

(1)

in welcher bedeuten:
m ist die Zahl Null oder 1 (wobei im Falle m = 0 diese Gruppe Wasserstoff ist);
die freistehende Azogruppe kann an den mittelständigen Naphthalinkern in 6- oder 7-Stellung gebunden sein;
sofern m gleich 1 ist, ist diese Sulfogruppe in 5-Stellung gebunden, wenn die Azogruppe in 6-Stellung steht, und ist in 6-Stellung gebunden, wenn die Azogruppe in 7-Stellung steht;
$R^1$ ist ein Wasserstoffatom oder eine geradkettige oder verzweigte Alkylgruppe von 1 bis 4 C-Atomen, die substituiert sein kann;
$R^2$ ist ein Wasserstoffatom oder eine Cycloalkylgruppe, die durch 1 bis 3 Methylgruppen substituiert sein kann, oder eine geradkettige oder verzweigte Alkylgruppe von 1 bis 4 C-Atomen, die substituiert sein kann, oder ist ein gegebenenfalls substituierter Arylrest,
wobei $R^1$ und $R^2$ zueinander gleich oder voneinander verschieden sein können, oder
$R^1$ und $R^2$ bilden als Alkylenreste von 1 bis 4 C-Atomen zusammen mit dem Stickstoffatom und gegebenenfalls einem Säuerstoff-, Schwefel- oder Stickstoffatom als weiterem Heteroatom einen heterocyclischen 6-gliedrigen Rest;
Y ist die Vinylgruppe oder eine Gruppe der allgemeinen Formel (2)
$-CH_2-CH_2-X$ (2)
in welcher
X einen alkalisch eliminierbaren, anorganischen oder organischen Rest bedeutet;
M ist ein Wasserstoffatom oder das Äquivalent eines Metalls.

2. Kupferkomplex-Disazoverbindungen nach Anspruch 1 der allgemeinen Formel

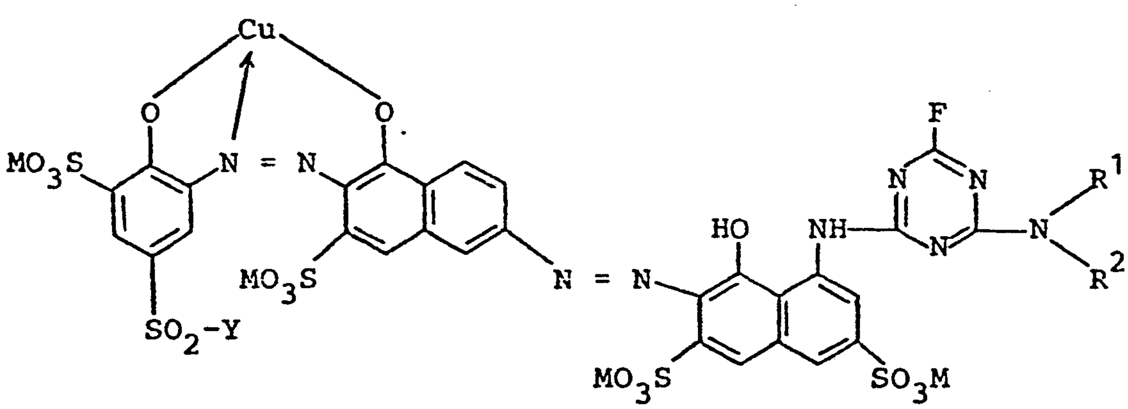

in welcher M, Y, $R^1$ und $R^2$ die in Anspruch 1 genannten Bedeutungen haben.

3. Kupferkomplex-Disazoverbindungen nach Anspruch 1 der allgemeinen Formel

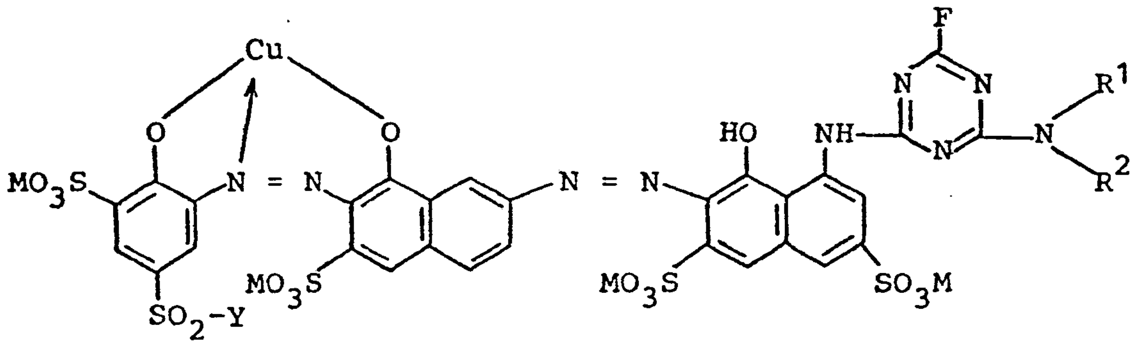

in welcher M, Y, $R^1$ und $R^2$ die in Anspruch 1 genannten Bedeutungen haben.

4. Kupferkomplex-Disazoverbindungen nach Anspruch 1, 2 oder 3, dadurch gekennzeichnet, daß $R^1$ ein Wasserstoffatom oder eine Alkylgruppe von 1 bis 4 C-Atomen bedeutet, die durch einen oder zwei Substituenten aus der Gruppe Acetylamino, Hydroxy, Sulfato, ß-Sulfatoäthylsulfonyl, Vinylsulfonyl, ß-Thiosulfatoäthylsulfonyl, Alkoxy von 1 bis 4 C-Atomen, Sulfo, Carboxy, Phenyl, Naphthyl, durch Sulfo, Carboxy, ß-Sulfatoäthylsulfonyl, Vinylsulfonyl, ß-Thiosulfatoäthylsulfonyl, Alkyl von 1 bis 4 C-Atomen, Alkoxy von 1 bis 4 C-Atomen, Chlor, Sulfamoyl und/oder Carbamoyl substituiertes Phenyl und durch Sulfo, Carboxy, ß-Sulfatoäthylsulfonyl, Vinylsulfonyl, ß-Thiosulfatoäthylsulfonyl, Alkoxy von 1 bis 4 C-Atomen, Alkyl von 1 bis 4 C-Atomen, Chlor, Sulfamoyl und/oder Carbamoyl substituiertes Naphthyl substituiert sein kann, und $R^2$ für ein Wasserstoffatom oder eine Cyclopentyl- oder Cyclohexylgruppe steht, die durch 1 bis 3 Methylgruppen substituiert sein können, oder eine Alkylgruppe von 1 bis 4 C-Atomen bedeutet, die durch einen oder zwei Substituenten aus der Gruppe Acetylamino, Hydroxy, Sulfato, ß-Sulfatoäthylsulfonyl, Vinylsulfonyl, ß-Thiosulfatoäthylsulfonyl, Alkoxy von 1 bis 4 C-Atomen, Sulfo, Carboxy, Phenyl, Naphthyl, durch Sulfo, Carboxy, ß-Sulfatoäthylsulfonyl, Vinylsulfonyl, ß-Thiosulfatoäthylsulfonyl, Alkyl von 1 bis 4 C-Atomen, Alkoxy von 1 bis 4 C-Atomen, Chlor, Sulfamoyl und/oder Carbamoyl substituiertes Phenyl und durch Sulfo, Carboxy, ß-Sulfatoäthylsulfonyl, Vinylsulfonyl, ß-Thiosulfatoäthylsulfonyl, Alkoxy von 1 bis 4 C-Atomen, Alkyl von 1 bis 4 C-Atomen, Chlor, Sulfamoyl und/oder Carbamoyl substituiertes Naphthyl substituiert sein kann, oder ein Phenylrest oder Naphthylrest ist, die durch Substituenten aus der Gruppe Carboxy, Sulfo, Alkyl von 1 bis 4 C-Atomen, Alkoxy von 1 bis 4 C-Atomen, Hydroxy, Chlor, ß-Sulfato-äthylsulfonyl, Vinylsulfonyl, ß-Thiosulfatoäthylsulfonyl, Alkanoylamino von 1 bis 4 C-Atomen im Alkylrest und Carbalkoxy mit 1 bis 4 C-Atomen im Alkylrest substituiert sein können, oder $R^1$ und $R^2$ zusammen mit dem Stick stoffatom den Morpholin-, Thiomorpholin-, Piperazinoder Piperidinrest bilden.

5. Verbindungen nach einem der Ansprüche 1 bis 4, dadurch gekennzeichnet, daß Y für die ß-Sulfatoäthyl- oder die Vinylgruppe steht.

6. Verbindungen nach Anspruch 1 der allgemeinen Formel

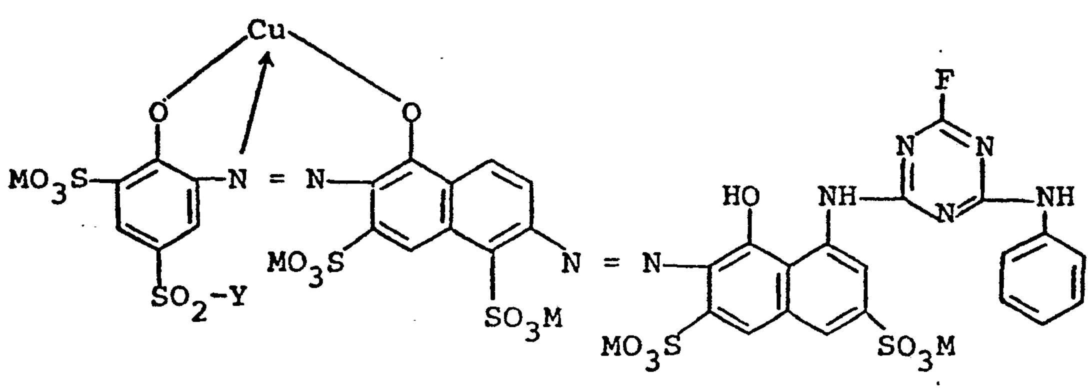

in welcher Y für die ß-Sulfatoäthyl- oder die Vinylgruppe steht und M die in Anspruch 1 genannte Bedeutung besitzt.

7. Verbindungen nach Anspruch 1 der allgemeinen Formel

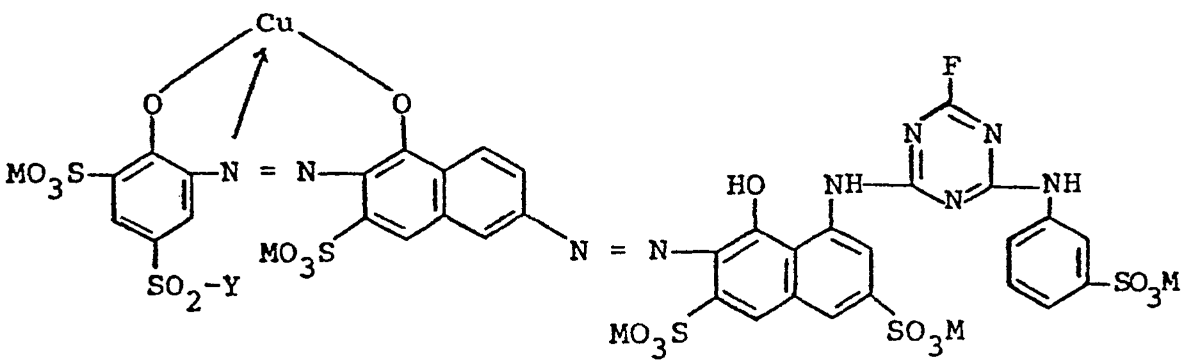

in welcher Y für die ß-Sulfatoäthyl- oder die Vinylgruppe steht und M die in Anspruch 1 genannte Bedeutung besitzt.

8. Verbindungen nach Anspruch 1 der allgemeinen Formel

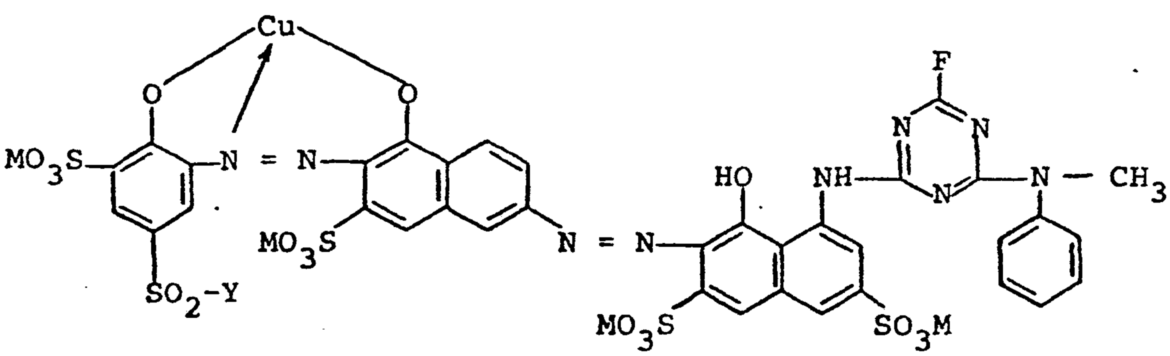

in welcher Y für die ß-Sulfatoäthyl- oder die Vinylgruppe steht und M die in Anspruch 1 genannte Bedeutung besitzt.

9. Verbindungen nach einem der Ansprüche 1 bis 8, dadurch gekennzeichnet, daß M für Natrium oder Kalium steht.

10. Verfahren zur Herstellung der in Anspruch 1 genannten und definierten Kupferkomplex-Disazoverbindungen der allgemeinen Formel (1), dadurch gekennzeichnet, daß man

a) eine Kupferkomplex-Monoazoverbindung der allgemeinen Formel (3)

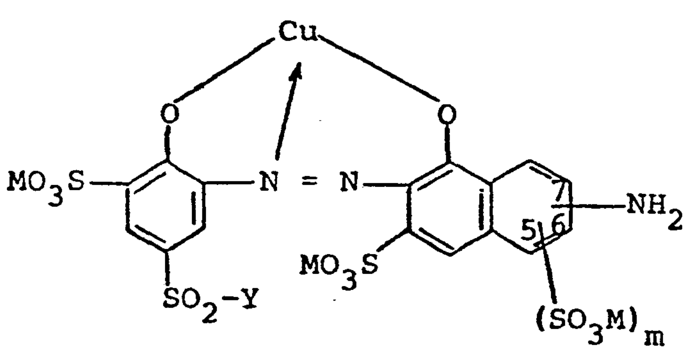

(3)

(in welcher m, Y und M die in Anspruch 1 genannten Bedeutungen haben und die freistehende Aminogruppe in 6-Stellung oder 7-Stellung an den Naphthalinkern gebunden ist, wobei im Falle, daß m gleich 1 ist, diese Sulfogruppe in 5-Stellung an den Naphthalinkern gebunden ist, wenn die Aminogruppe in 6-Stellung steht, und

die Sulfogruppe in 6-Stellung an den Naphthalinkern gebunden ist, wenn die Aminogruppe in 7-Stellung steht) diazotiert und mit einer Verbindung der allgemeinen Formel (4)

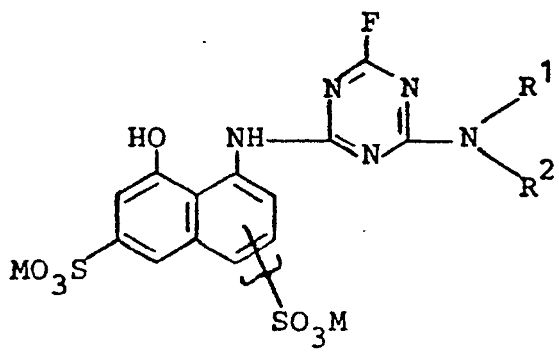

(4)

(in welcher M, $R^1$ und $R^2$ die obengenannten Bedeutungen besitzen) kuppelt oder daß man
b) eine o,o'-Dihydroxy-Azoverbindung der allgemeinen Formel (5)

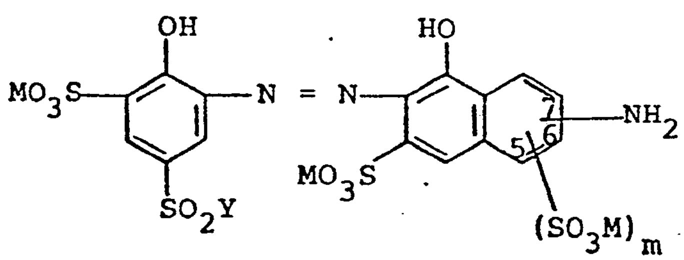

(5)

(in welcher M, Y und m die für Formel (1) bzw. Formel (3) angegebenen Bedeutungen haben) diazotiert und mit einer Verbindung der obengenannten und definierten allgemeinen Formel (4) kuppelt und diese metallfreie Disazoverbindung sodann mit einem kupferabgebenden Mittel behandelt oder daß man
c) eine Disazoverbindung der allgemeinen Formel (6)

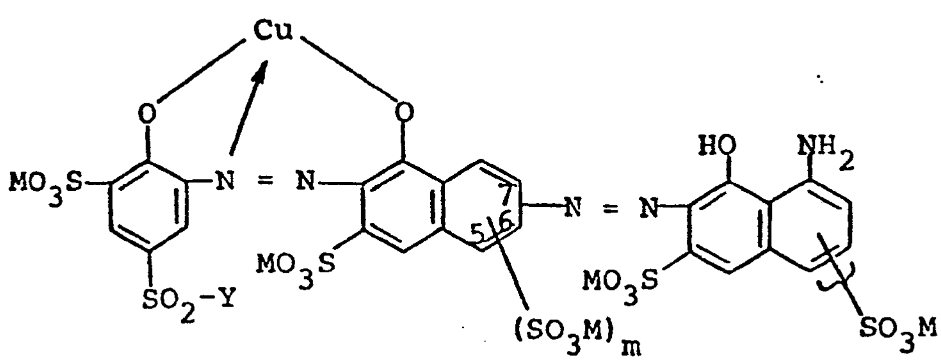

(6)

(in welcher M, Y und m die in Anspruch 1 genannten Bedeutungen haben) mit einer Difluor-s-triazin-Verbindung der allgemeinen Formel (7)

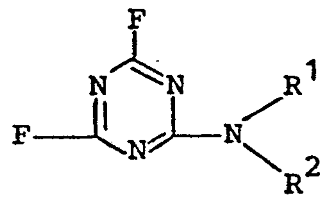

(7)

(in welcher $R^1$ und $R^2$ die in Anspruch 1 genannten Bedeutungen haben) umsetzt oder daß man
d) eine metallfreie Disazoverbindung der allgemeinen Formel (8)

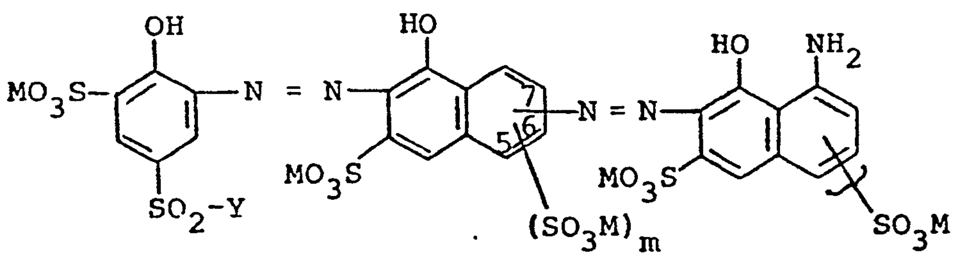

(8)

(in welcher M, Y und m die in Anspruch 1 genannten Bedeutungen haben) mit einer Difluor-s-triazinverbindung der oben genannten und definierten allgemeinen Formel (7) umsetzt und sodann mit einem kupferabgebenden Mittel behandelt oder daß man
e) eine Azoverbindung der allgemeinen Formel (9)

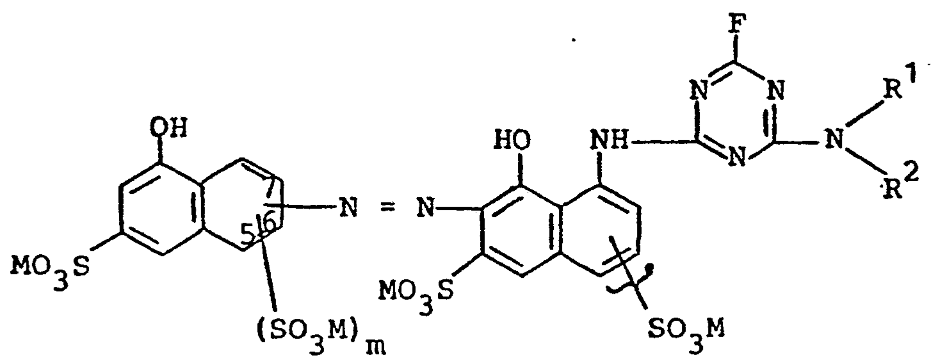

(9)

(in welcher M, m, $R^1$ und $R^2$ die in Anspruch 1 genannten Bedeutungen haben) mit der Diazoniumverbindung eines Aminophenols der allgemeinen Formel (10)

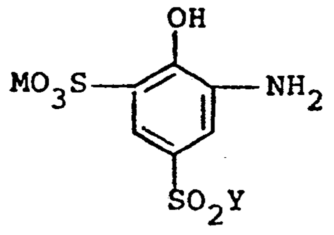

(10)

(in welcher Y die in Anspruch 1 genannte Bedeutung hat) kuppelt und die Disazoverbindung mit einem kupferabgebenden Mittel behandelt, oder daß man

f) eine metallfreie o,o'-Dihydroxy-Disazoverbindung der allgemeinen Formel (11)

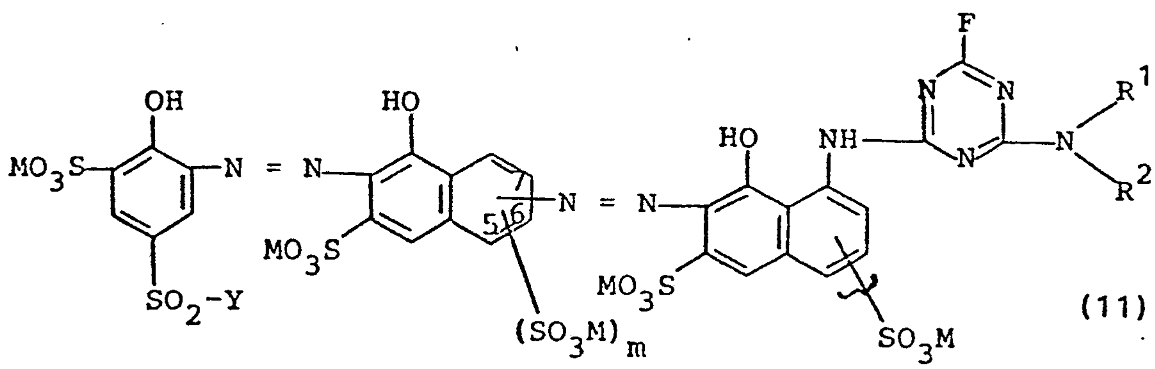

(11)

(in welcher M, m, Y, $R^1$ und $R^2$ die in Anspruch 1 genannten Bedeutungen haben) mit einem kupferabgebenden Mittel behandelt, oder daß man

g) eine Kupferkomplex-Disazoverbindung der allgemeinen Formel (12)

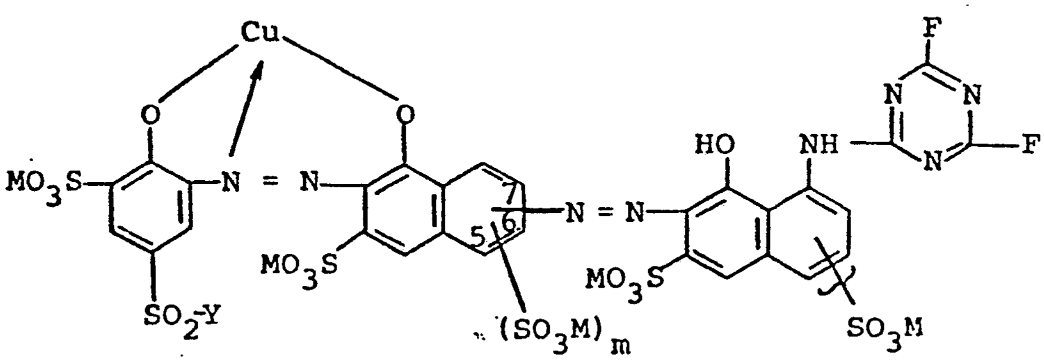

(12)

(in welcher M, m und Y die in Anspruch 1 genannten Bedeutungen haben) mit einer Verbindung der allgemeinen Formel $HNR^1R^2$ mit $R^1$ und $R^2$ der obengenannten Bedeutung umsetzt.

11. Verwendung der in Anspruch 1 genannten und definierten oder der nach einem der Verfahren von Anspruch 10 hergestellten Verbindungen der allgemeinen Formel (1) zum Färben oder Bedrucken von hydroxy- und/oder carbonamidgruppenhaltigen Materialien.

**Revendications**

1 - Composés disazoïques de complexes de cuivre solubles dans l'eau répondant à la formule générale (1)

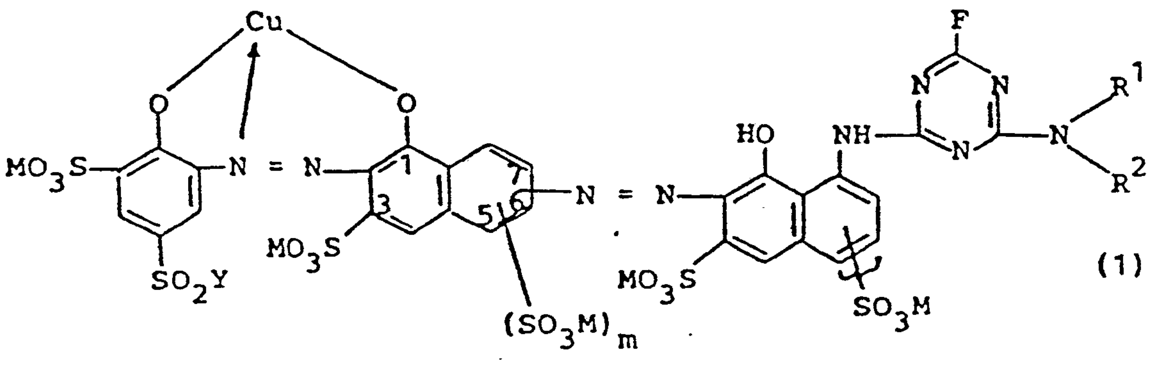

(1)

dans laquelle
m est le nombre 0 ou 1 (ce groupe étantl'hydrogéne lorsque m = 0)
le groupe azo libre peut être lié au noyau naphtaléne du milieu en position 6 ou 7
si m = 1, ce groupe sulfo est lié en position 5 lorsque le groupe azo est en position 6, et il est lié en position 6 lorsque le groupe azo est en position 7;
$R^1$ est un atome d'hydrogéne ou un groupe alkyle linéaire ou ramifié en $C_1$ à $C_4$, qui peut être substitué;
$R^2$ est un atome d'hydrogéne ou un groupe cycloalkyle qui peut être substitué par 1 à 3 groupes méthyles, ou un groupe alkyle linéaire ou ramifié en $C_1$ à $C_4$, qui peut être substitué, ou est un radical aryle éventuellement substitué,
$R^1$ et $R^2$ pouvant être identiques ou différents l'un l'autre, ou
$R^1$ et $R^2$ forment en tant que radicaux alkylénesen $C_1$ à $C_4$, avec l'atome d'azote, et éventuellement un atome d'oxygéne, de soufre, ou d'azote comme autre hétéroatome, un radical hétérocyclique à 6 maillons;
Y est le groupe vinyle ou un groupe répondant à la formule générale (2)
$- CH_2 - CH_2 - X$ (2)
dans laquelle
X désigne un radical minéral ou organique éliminable par les alcalis;
M est un atome d'hydrogéne ou l'équivalent d'un métal.

2 - Composés disazoïques de complexes de cuivre suivant la revendication 1 répondant à la formule générale

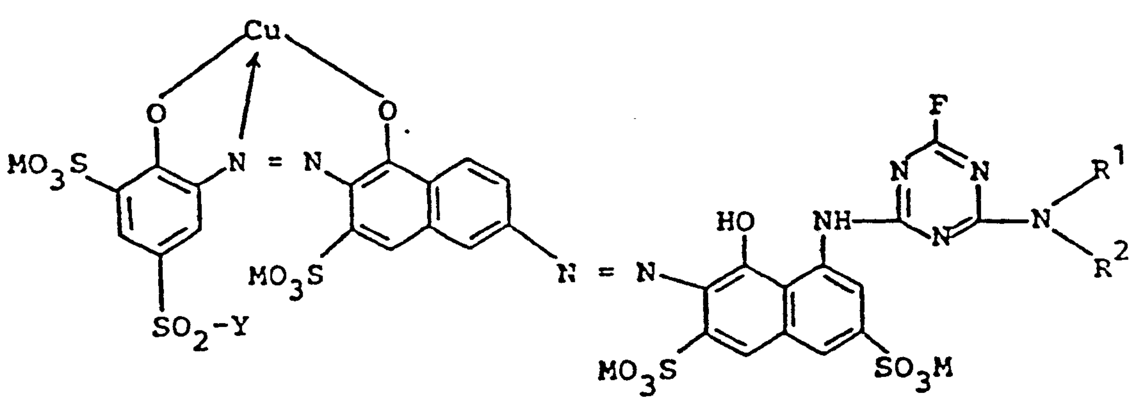

dans laquelle M, Y, $R^1$ et $R^2$ ont les significations indiquées dans la revendication 1.

3 - Composés disazoïques de complexes de cuivre suivant la revendication 1 répondant à la formule générale

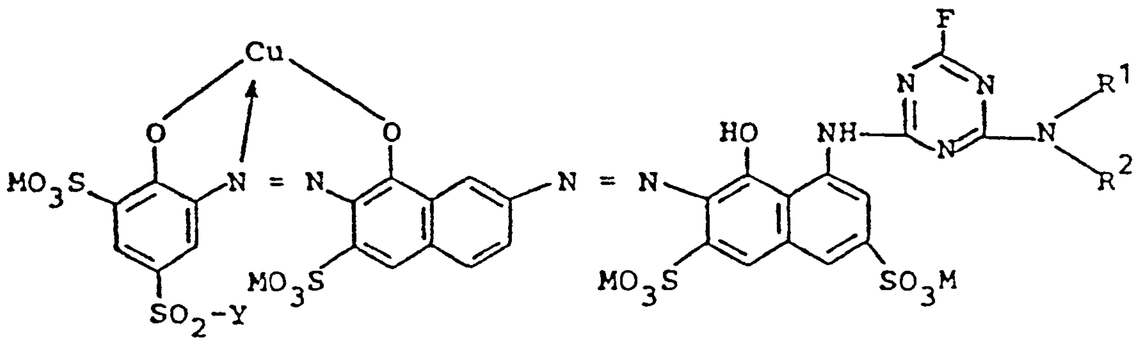

dans laquelle M, Y, $R^1$ et $R^2$ ont les significations indiquées dans la revendication 1.

4 - Composés disazoïques de complexes de cuivre suivant les revendications 1, 2 ou 3, caractérisés en ce que $R^1$ désigne un atome d'hydrogène ou un groupe alkyle en $C_1$ à $C_4$ qui peut être substitué par un ou deux substituants du groupe des radicaux acétylamino, hydroxy, sulfato, ß-sulfatoéthylsulfonyle, vinylsulfonyle, ß-thiosulfatoéthylsulfonyle, alcoxy en $C_1$ à $C_4$, sulfo, carboxy, phényle, naphtyle, phényle substitué par un radical sulfo, carboxy, β-sulfatoéthylsulfonyle, vinylsulfonyle, β-thiosulfatoéthylsulfonyle, alkyle en $C_1$ à $C_4$, alcoxy en $C_1$ à $C_4$, chlore, sulfamoyle et/ou carbamoyle, et naphtyle substitué par un radical sulfo, carboxy, β-sulfatoéthylsulfonyle, vinylsulfonyle, β -thiosulfatoéthylsulfonyle, alcoxy en $C_1$ à $C_4$, alkyle en $C_1$ à $C_4$, chlore, sulfamoyle et/ou carbamoyle et $R^2$ désigne un atome d'hydrogene ou un groupe cyclopentyle ou cyclohexyle qui peut être substitué par 1 à 3 groupes méthyles, ou un groupe alkyle en $C_1$ à $C_4$ qui peut être substitué par un ou deux substituants du groupe des radicaux acétylamino, hydroxy, sulfato, β -sulfatoéthylsulfonyle, vinylsulfonyle, β -thiosulfatoéthylsulfonyle, alcoxy en $C_1$ à $C_4$, sulfo, carboxy, phényle, naphtyle, phényle substitué par un radical sulfo, carboxy, phényle, naphtyle, phényle substitué par un radical sulfo, carboxy, β -sulfatoéthylsulfonyle, vinylsulfonyle, β-thiosulfatoéthylsulfonyle, alkyle en $C_1$ à $C_4$, alcoxy en $C_1$ à $C_4$, chlore, sulfamoyle et/ou carbamoyle, et naphtyle substitué par un radical sulfo, carboxy, β-sulfato-éthylsulfonyle, vinylsulfonyle, β-thiosulfatoéthylsulfonyle, alcoxy en $C_1$ à $C_4$, alkyle en $C_1$ à $C_4$, chlore, sulfamoyle et/ou carbamoyle, ou un radical phényle ou un radical naphtyle qui peuvent être substitués par des substituants du groupe des radicaux carboxy, sulfo, alkyle en $C_1$ à $C_4$, alcoxy en $C_1$ à $C_4$, hydroxy, chlore, β-sulfatoéthylsulfonyle, vinylsulfonyle, β -thiosulfatoéthylsulfonyle, alcanoylamino ayant 1 à 4 atomes de carbone dans le radical alkyle et carbalcoxy ayant 1 à 4 atomes de C dans le radical alkyle, ou bien $R^1$ et $R^2$ forment avec l'atome d'azote le radical morpholine, thiomorpholine, pipérazine ou pipéridine.

5 - Composés suivant l'une des revendications 1 à 4, caractérisés en ce qu'Y désigne le groupe β-sulfatoéthyle ou le groupe vinyle.

6 - Composés suivant la revendication 1 répondant à la mule générale

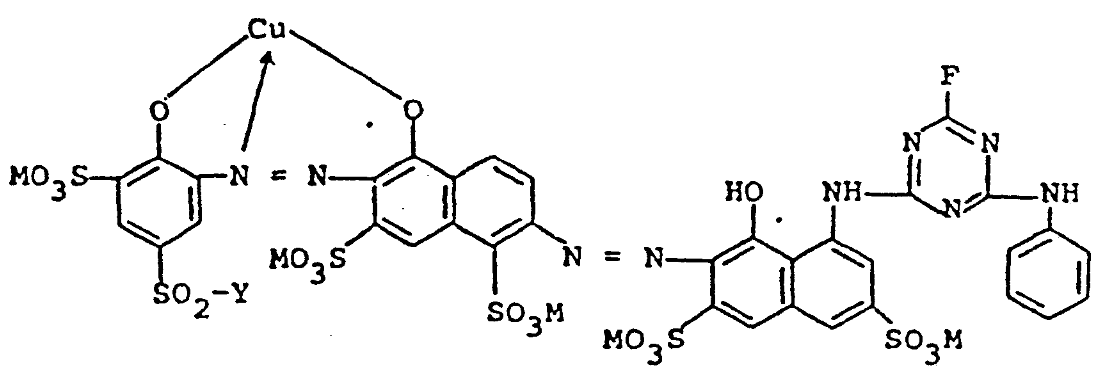

dans laquelle Y désigne le groupe β-sulfatoéthyle ou groupe vinyle et M posséde la signification indiquée la revendication 1.

7 - Composés suivant la revendication 1, répondant à la formule générale

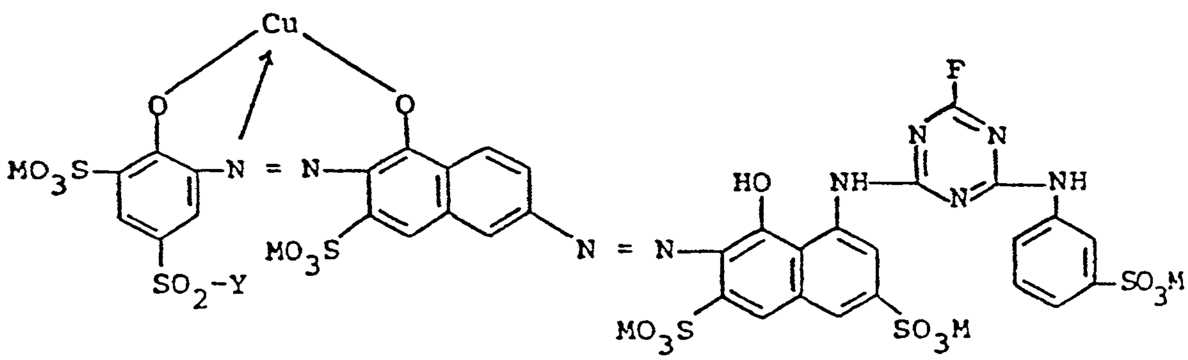

dans laquelle Y désigne le groupe ß-sulfatoéthyle ou le groupe vinyle et M a la signification indiquée dans la revendication 1,

8 - Composés suivant la revendication 1 répondant à la formule générale

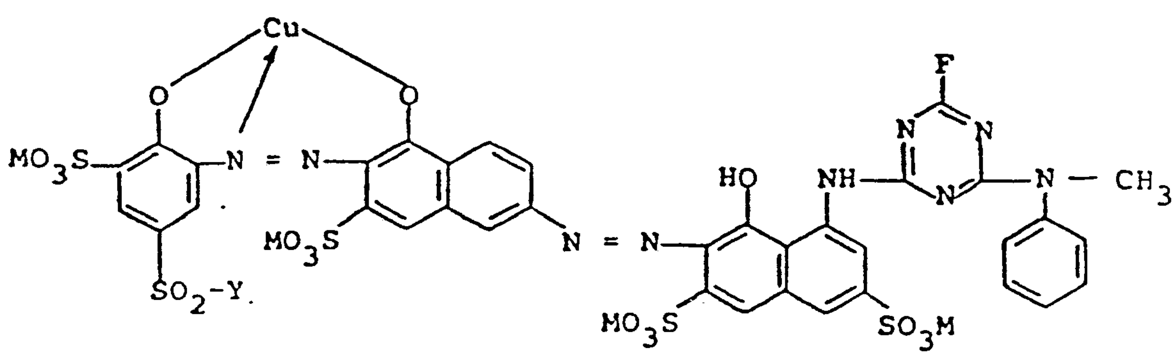

dans laquelle Y désigne le groupe β-sulfatoéthyle ou le groupe vinyle et M a la signification indiquée dans la revendication 1.

9 - Composés suivant l'une des revendications 1 à 8, caractérisés en ce que M désigne le sodium ou le potassium.

10 - Procédé de préparation des composés disazoïques de complexes de cuivre répondant à la formule générale (1) cités dans la revendication (1), caractérisé en ce que a) on diazote un composé monoazoique de complexe de cuivre répondant à la formule générale (3)

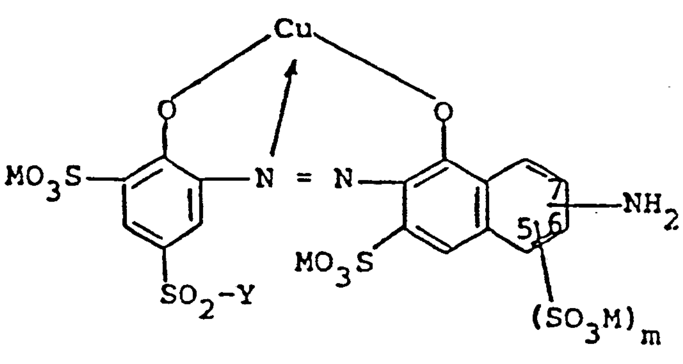

(3)

(dans laquelle m, Y et M ont les significations indiquées dans la revendication 1, et le groupe amino libre est lié en position 6 ou en position 7 au noyau du naphtalene, étant entendu que dans le cas ou m = 1, ce groupe sulfo est lié en position 5 au noyau du naphtaléne, lorsque le groupe amino est en position 6, et le groupe sulfo est lié en position 6 au noyau du naphtaléne lorsque le groupe amino est en position 7),-et on le copule avec un composé répondant à la formule générale (4)

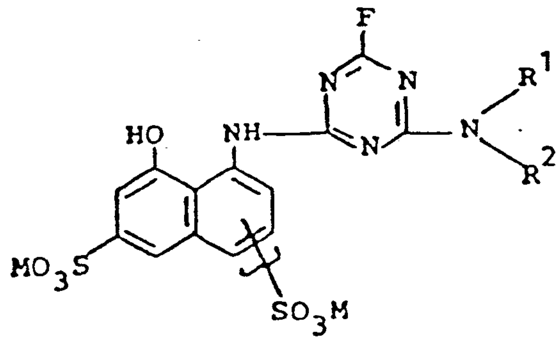

(4)

(dans laquelle M, $R^1$ et $R^2$ possédent les significations indiquées ci-dessus) ou en ce que
b) on diazote un composé azoique 0,0'-dihydroxyle répondant à la formule générale (5)

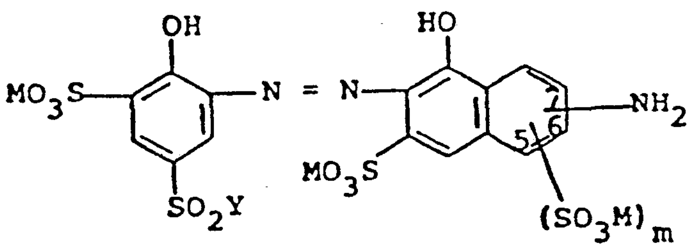

(5)

(dans laquelle M, Y et m ont les significations indiquées pour la formule (1) ou la formule (3), et on le copule avec un composé répondant à la formule générale (4) citée et définie ci-dessus, puis on traite ce composé disazoïque exempt de métal par un agent cédant du cuivre, ou en ce que
c) on fait réagir un composé disazoique répondant à la formule générale (6)

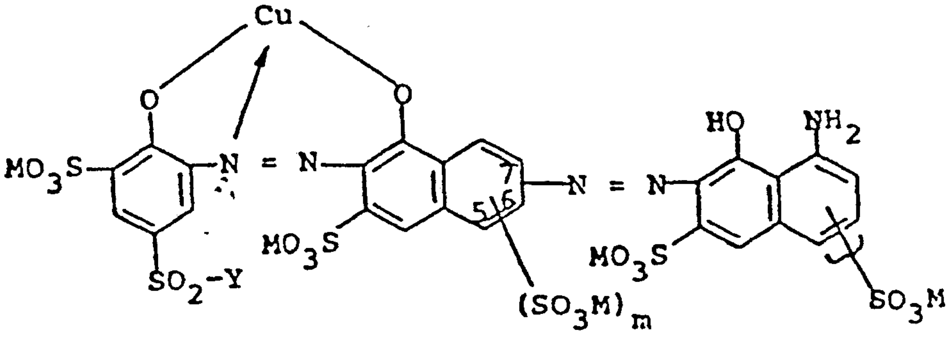

(6)

(dans laquelle M, Y et m ont les significations indiquées dans la revendication 1) avec une difluoro-s-triazine répondant à la formule générale (7)

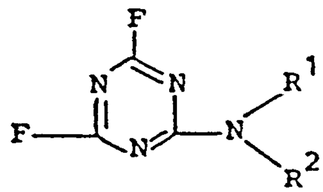

(7)

(dans laquelle $R^1$ et $R^2$ ont les significations indiquées dans la revendication 1), ou en ce que

d) on fait réagir un composé disazoïque exempt de métal répondant à la formule générale (8)

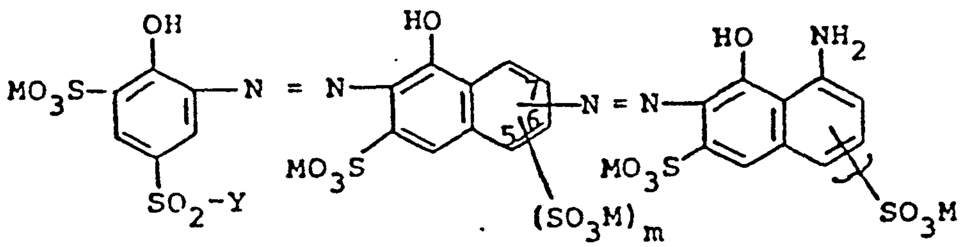

(8)

(dans laquelle M, Y et m ont les significations indiquées dans la revendication 1), avec une difluoro-s-triazine répondant à la formule générale (7) indiquée et définie cidessus, puis on le traite par un agent cédant du cuivre, ou en ce que

e) on copule un composé azoïque répondant à la formule generale (9)

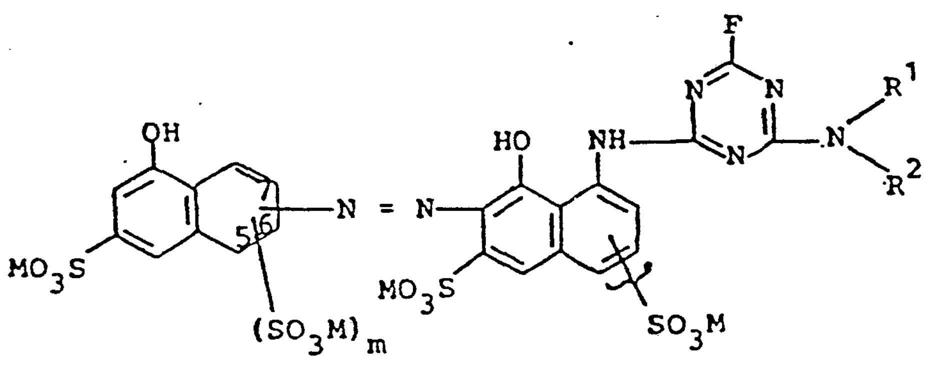

(9)

(dans laquelle M, m, $R^1$ et $R^2$ ont les significations indiquées dans la revendication 1) avec le composé diazonium d'un aminophénol répondant à la formule générale (10)

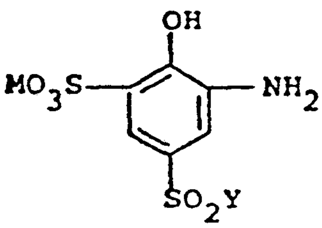

(10)

(dans laquelle Y a la signification indiquée dans la revendication 1) et on traite le composé disazoïque par un agent cédant du cuivre, ou en ce que

f) on traite un composé disazoïque o,o'-dihydroxylé exempt de métal répondant à la formule générale (11)

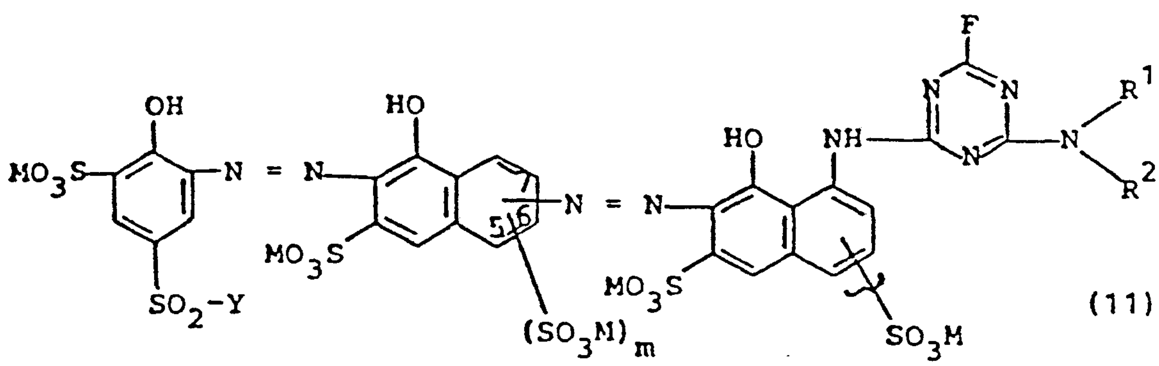

(11)

(dans laquelle M, m, Y, $R^1$ et $R^2$ ont les significations indiquées dans la revendication 1) par un agent cédant du cuivre, ou en ce que

g) on fait réagir un composé disazoïque de complexe de cuivre répondant à la formule générale (12)

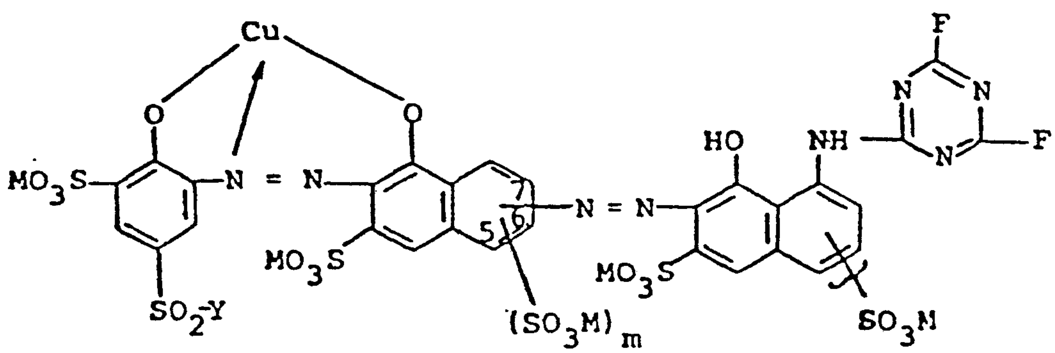

(12)

(dans laquelle M, m et Y ont les significations indiquées dans la revendication 1) avec un composé répondant à la formule générale $HNR^1R^2$ dans laquelle $R^1$ et $R^2$ ont les significations indiquées ci-dessus.

11 - Utilisation des composés répondant à la formule générale (1) indiqués et définis dans la revendication 1 ou préparés par un des procédés de la revendication 10 pour la teinture ou l'impression de matières contenant des groupes hydroxys ou carbamides

**Claims:**

1. Water-soluble copper-complex disazo compounds of the general formula (1)

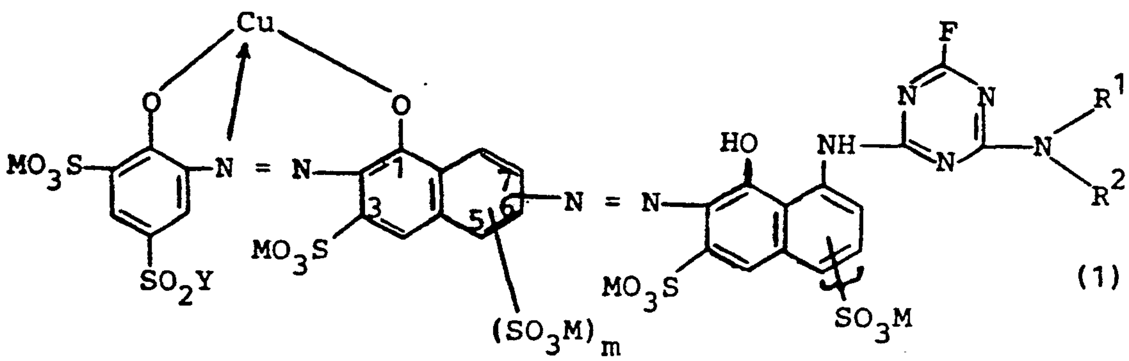

(1)

in which:

m is the number zero or 1 (where in the case of m = 0 this group is hydrogen);

the free azo group can be bonded in 6- or 7-position to the centrally located naphthalene nucleus,;

if m is equal to 1, this sulfo group is bonded in the 5-position when the azo group is in the 6-position, and is bonded in the 6-position when the azo group is in the 7-position;

$R^1$ is a hydrogen atom or a straight-chain or branched alkyl group having 1 to 4 carbon atoms which can be substituted;

$R^2$ is a hydrogen atom or a cycloalkyl group which can be substituted by 1 to 3 methyl groups, or a straightchain or branched alkyl group having 1 to 4 carbon atoms which can be substituted, or an optionally substituted aryl radical;

$R^1$ and $R^2$ can be identical to or different from each other; or

$R^1$ and $R^2$ are alkylene groups having 1 to 4 carbon atoms and form together with the nitrogen atom and optionally an oxygen, sulfur or nitrogen atom as a further heteroatom a heterocyclic 6-membered radical;

Y is the vinyl group or a group of the general formula (2)

$-CH_2-CH_2-X$ (2)

in which

X denotes an inorganic or organic radical which can be eliminated under alkaline conditions;

M is a hydrogen atom or the equivalent of a metal.

2. Copper-complex disazo compounds according to claim 1, of the general formula

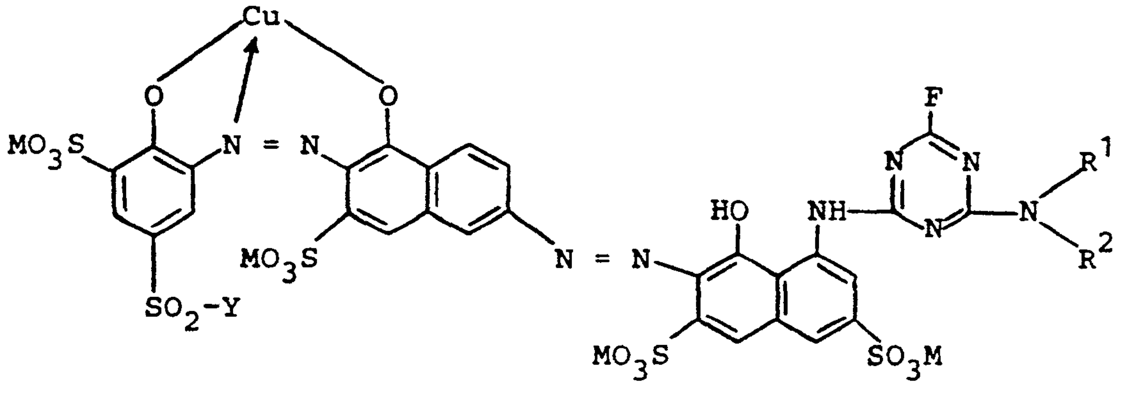

in which M, Y, $R^1$ and $R^2$ have the meanings mentioned in claim 1.

3. Copper-complex disazo compounds according to claim 1, of the general formula

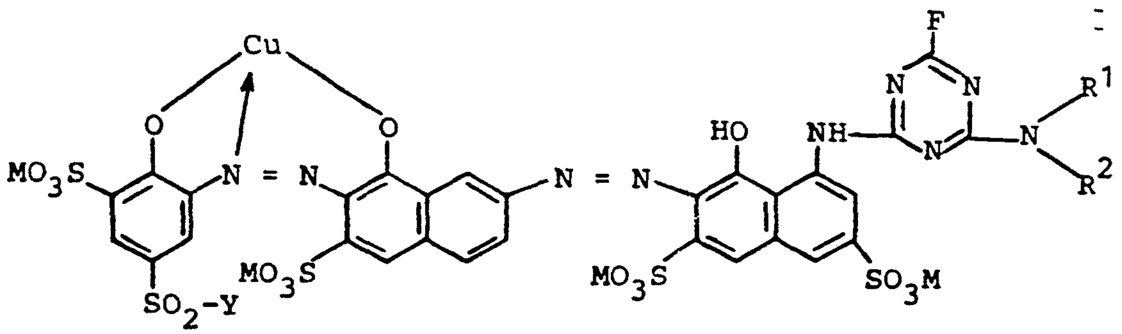

in which M, Y, $R^1$ and $R^2$ have the meanings mentioned in claim 1.

4. Copper-complex disazo compounds according to claims 1, 2 or 3, characterized by that $R^1$ denotes a hydrogen atom or an alkyl group having 1 to 4 carbon atoms which can be substituted by one or two substituents from the group consisting of acetylamino, hydroxy, sulfato, β-sulfato-ethylsulfonyl, vinylsulfonyl, β-thiosulfatoethylsulfonyl, alkoxy having 1 to 4 carbon atoms, sulfo, carboxy, phenyl, naphthyl, phenyl which is substituted by sulfo, carboxy, β-sulfatoethylsulfonyl, vinylsulfonyl, β-thiosulfatoethyl-sulfonyl, alkyl having 1 to 4 carbon atoms, alkoxy having 1 to 4 carbon atoms, chlorine, sulfamoyl and/or carbamoyl, and naphthyl which is substituted by sulfo, carboxy, β-sulfatoethylsulfonyl, vinylsulfonyl, β-thiosulfato-ethylsulfonyl, alkoxy having 1 to 4 carbon atoms, alkyl having 1 to 4 carbon atoms, chlorine, sulfamoyl and/or carbamoyl, and $R^2$ represents a hydrogen atom or a cyclopentyl or cyclohexyl group, which can be substituted by 1 to 3 methyl groups, or an alkyl group having 1 to 4 carbon atoms which can be substituted by one or two substituents from the group consisting of acetylamino, hydroxy, sulfato, β-sulfatoethylsulfonyl, vinylsulfonyl, β-thiosulfatoethylsulfonyl, alkoxy having 1 to 4 carbonatoms, sulfo, carboxy, phenyl, naphthyl, phenyl which is substituted by sulfo, carboxy, β-sulfatoethylsulfonyl, vinylsulfonyl, β-thio-sulfatoethylsulfonyl, alkyl having 1 to 4 carbon atoms, alkoxy having 1 to 4 carbon atoms, chlorine, sulfamoyl and/or carbamoyl, and naphthyl which is substituted by sulfo, carboxy, β-sulfatoethylsulfonyl, vinylsulfonyl, β-thiosulfatoethylsulfonyl, alkoxy having 1 to 4 carbon atoms, alkyl having 1 to 4 carbon atoms, chlorine, sulfamoyl and/or carbamoyl, or is a phenyl or naphthyl radical, which can be substituted by substituents from the group consisting of carboxy, sulfo, alkyl having 1 to 4 carbon atoms, alkoxy having 1 to 4 carbon atoms, hydroxy, chlorine, β-sulfatoethylsulfonyl, vinylsulfonyl, β-thiosulfatoethylsulfonyl, alkanoylamino having 1 to 4 carbon atoms in the alkyl moiety and carbalkoxy having 1 to 4 carbon atoms in the alkyl moiety, or $R^1$ and $R^2$ form, together with the nitrogen atom, the morpholine, thiomorpholine, piperazine or piperidine radical.

5. Compounds according to any of claims 1 to 4, characterized by that Y represents the β-sulfatoethyl or the vinyl group.

6. Compounds according to claim 1, of the general formula

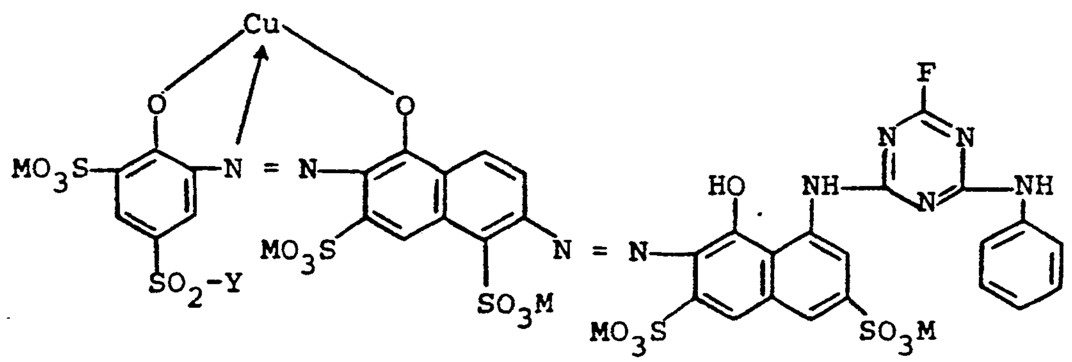

in which Y represents the β-sulfatoethyl or the vinyl group, and M has the meaning mentioned in claim 1.

7. Compounds according to claim 1, of the general formula

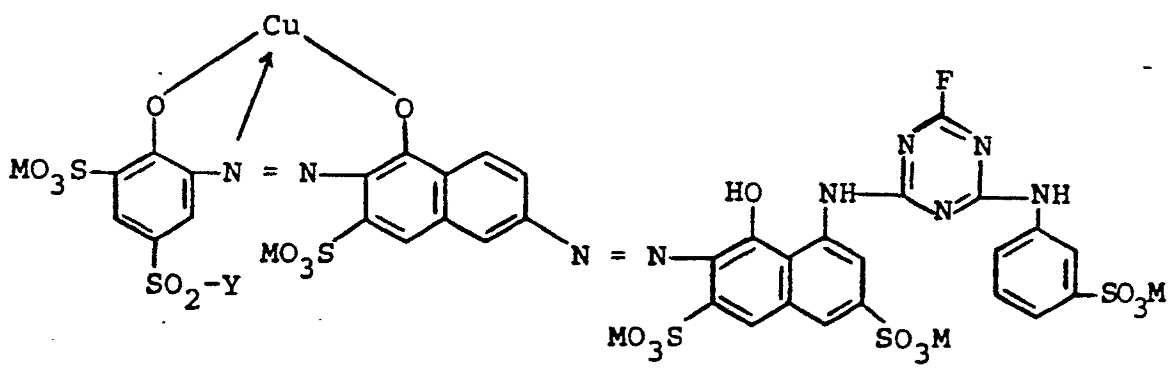

in which Y represents the β-sultatoethyl or the vinyl group, and M the meaning mentioned in claim 1.

8. Compounds according to claim 1, of the general formula

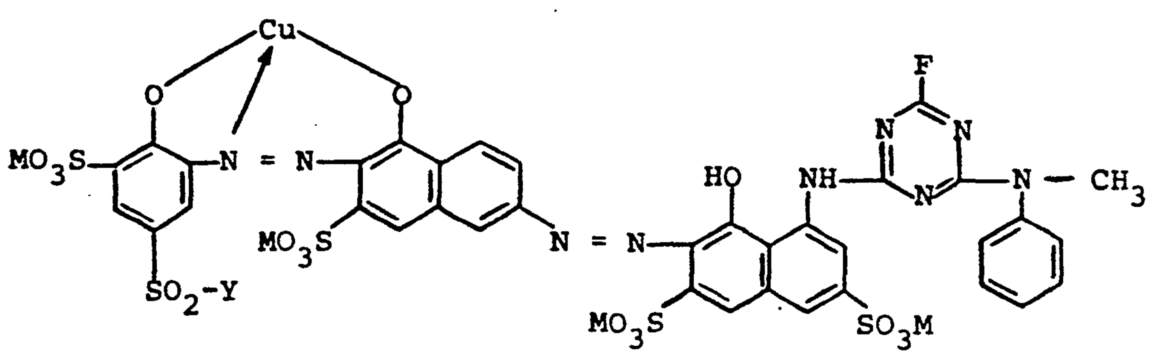

in which Y represents the β-sulfatoethyl or the vinyl group, and M has the meaning mentioned in claim 1

9. Compounds according to any of claims 1 to 8, characterized by that M represents sodium or potassium.

10. Processes for the preparation of copper-complex disazo compounds mentioned and defined in claim 1, of the general formula (1), characterized by that

a) a copper-complex monoazo compound of the general formula (3)

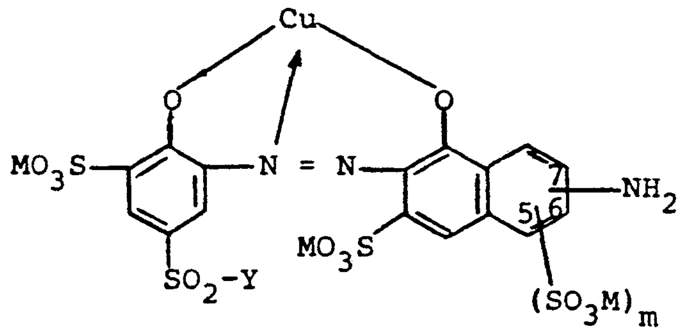

(3)

(in which m, Y and M are defined as in claim 1 and the free amino group is bonded in 6-position or 7-position to the naphthalene nucleus where in the case that m is equal to 1 this sulfo group is bonded in 5-position to the naphthalene nucleus when the aminp group is in the 6-position, and this sulfo group is bonded in 6-position to the naphthalene nucleus when the amino group is in the 7-position) is diazotized and coupled with a compound of the general formula (4)

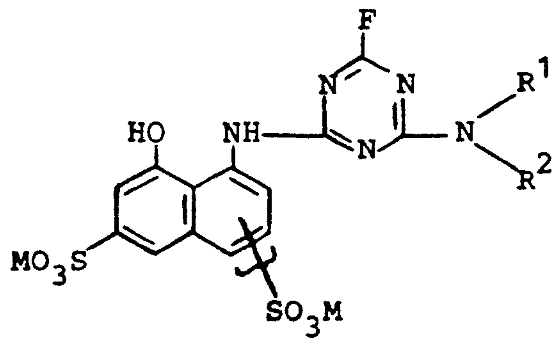

(4)

(in which M, $R^1$ and $R^2$ are defined as in claim 1), or that

b) an o,o'-dihydroxyazo compound of the general formula (5)

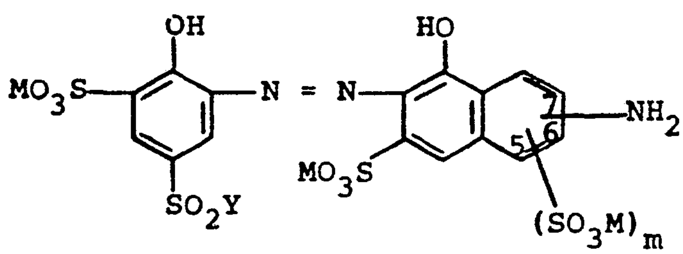

(5)

(in which M, Y and m have the meanings given for formula (1) or formula (3)) is diazotized and coupled with a compound of the general formula (4) mentioned and defined above, and this metal-free disazo compound is then treated with a copper-donating agent, or that

c) a disazo compound of the general formula (6)

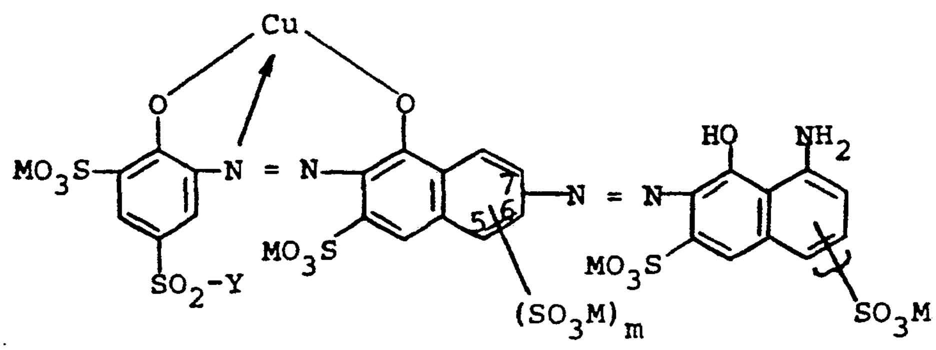

(6)

(in which M, Y and m have the meanings mentioned in claim 1) is reacted with a difluoro-s-triazine compound of the general formula (7)

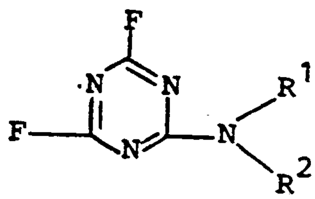

(7)

(in which $R^1$ and $R^2$ have the meanings mentioned in claim 1), or that
d) a metal-free disazo compound of the general formula (8)

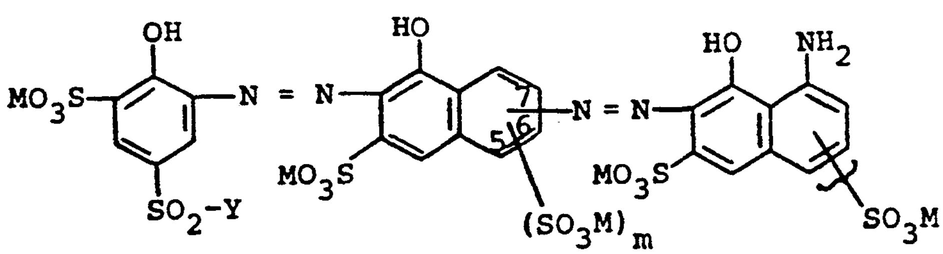

(8)

(in which M, Y and m have the meanings mentioned in claim 1) is reacted with a difluoro-s-triazine compound of the general formula (7) mentioned and defined above, and then reacted with a copper-donating agent, or that
e) an azo compound of the general formula (9)

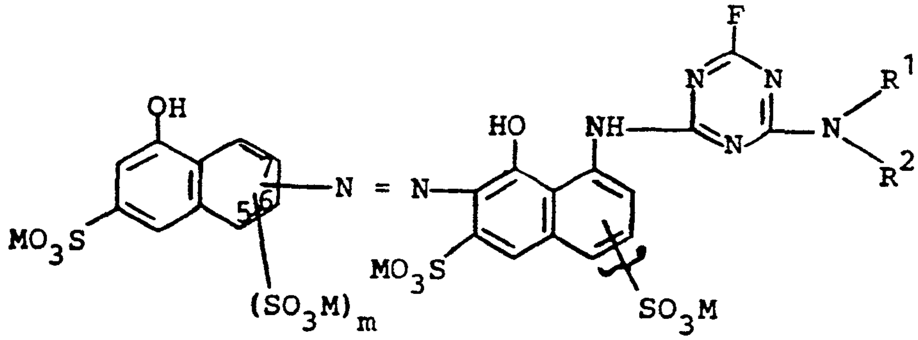

(9)

(in which M, m, $R^1$ and $R^2$ have the meanings mentioned in claim 1) is coupled with the diazonium compound of an aminophenol of the general formula (10)

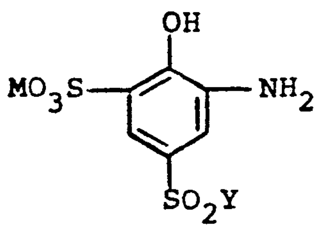

(10)

(in which Y has the meaning mentioned in claim 1) and the disazo compound is treated with a copper-donating agent, or that

f) a metal-free o,o'-dihydroxy-disazo compound of the general formula (11)

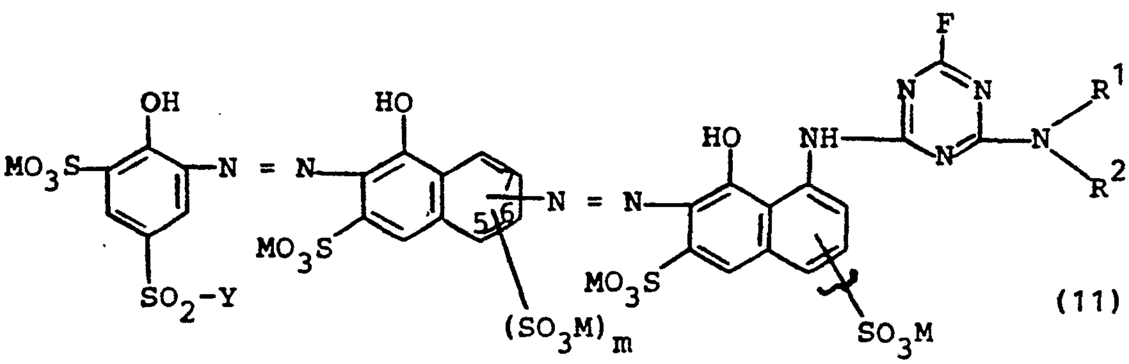

(11)

(in which M, m, Y, $R^1$ and $R^2$ have the meanings mentioned in claim 1) is reacted with a copper-donating agent, or that

g) a copper-complex disazo compound of the general formula (12)

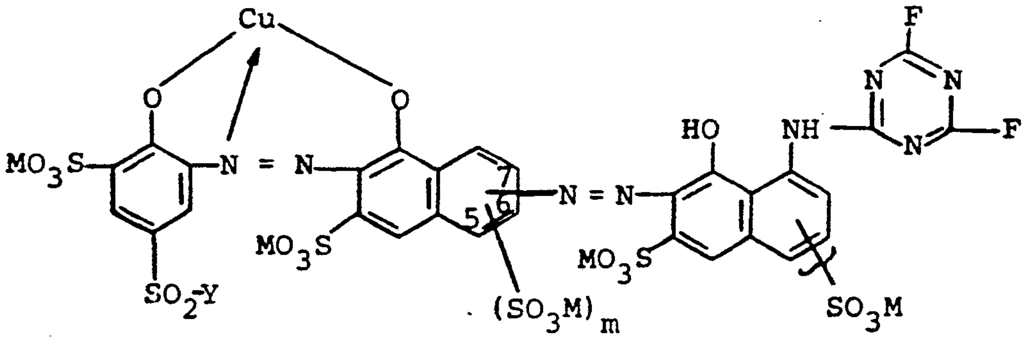

(12)

(in which M, m and Y have the meanings mentioned in claim 1) is reacted with a compound of the general formula $HNR^1R^2$ with $R^1$ and $R^2$ of the above-mentioned meaning.

11. Use of the compounds of the general formula (1) mentioned and defined in claim 1 or prepared according to one of the processes of claim 10, for dyeing or printing hydroxyand/or carboxamide-containing materials.